# EUROPEAN PATENT SPECIFICATION

(11) **EP 2 755 256 B1**
(45) Date of publication and mention of the grant of the patent: **26.10.2016**
(21) Application number: 12829625.8
(22) Date of filing: 06.09.2012
(51) Int. Cl.: H01M 2/14, H01M 2/16, H01M 10/052, H01M 4/04, H01M 4/13

(54) **SLURRY FOR SECONDARY BATTERIES**
AUFSCHLÄMMUNG FÜR SEKUNDÄRBATTERIEN
BOUILLIE POUR DES BATTERIES SECONDAIRES

(30) Priority: 08.09.2011 JP 2011196303
(43) Date of publication of application: 16.07.2014
(73) Proprietor: Zeon Corporation, Tokyo 100-8246 (JP)
(72) Inventor: KANEDA, Takuya, Tokyo 100-8246 (JP); AKIIKE, Junnosuke, Tokyo 100-8246 (JP)
(74) Representative: Vossius & Partner Patentanwälte Rechtsanwälte mbB
(86) International application number: PCT/JP2012/072766
(87) International publication number: WO 2013/035795

(56) References cited:
- JP-A- H0 326 325
- JP-A- H0 813 337
- JP-A- 2006 143 758
- JP-A- 2006 299 144
- JP-A- 2006 351 316
- JP-A- 2006 351 316
- US-B1- 6 830 657

## Description

### TECHNICAL FIELD

The present invention relates to slurry for secondary batteries, for more detail, to slurry for manufacturing a porous membrane for secondary batteries, which is formed on either surface of an electrode or a separator in a lithium ion secondary battery, which is superior in a thermal shrinkage resistance and can contribute to an improvement of a battery cycle characteristic. The present invention further relates to an electrode for secondary batteries, a separator for secondary batteries, and secondary batteries, each having a porous membrane for secondary batteries.

### BACKGROUND

Among batteries in practical uses, a lithium ion secondary battery shows the highest energetic density; and it is commonly used for small electronics. Further, in addition to the compact applications, an application for cars is also expected. Among them, a longer-life and further improvement for a safety of the lithium ion secondary battery are demanded.

The lithium ion secondary battery generally has a positive electrode and a negative electrode both including an electrode active material layer which is carried on a current collector, a separator and a nonaqueous electrolyte. Further, the electrode activating layer generally includes an electrode active material having an average particle diameter of around 5 to 50µm and a binder for the electrode activating layer. The electrode is generally manufactured by coating slurry for an electrode active material layer, including a powdery electrode active material, on a current collector; and then forming an electrode active material layer. Further, an extremely thin separator having around 10 to 50 µm thickness is generally used as a separator for separating the positive and negative electrodes. The lithium ion secondary battery is manufactured by passing through a laminating step, wherein the electrode and the separator are laminated; and a cutting step wherein the results are cut to a predetermined electrode forms.

However, when passing through this series of manufacturing steps, the electrode active material may be removed from the electrode activating layer; and a part of the removed electrode active material may be included in the obtained battery as foreign particles. Such foreign particles has a particle diameter of around 5 to 50 µm, which is approximately the same with the thickness of the separator. Thus, the foreign particles may penetrate the separator in an assembled battery, which may cause a short circuit.

In addition, heat generates when operating batteries. As a result, an organic separator composed of a stretched resin such as a stretched polyethylene resin is also heated. The organic separator composed of a stretched resin is generally easy to shrink even under a temperature of 150°C or less; which is easy to generate a short circuit of the obtained battery. Further, when a sharp formed protruding object, such as a nail, penetrate the battery (e.g. during a nail penetration test), it tends to short circuit instaneously, generate reaction heat, and extend the short-circuit part.

Therefore, for the purpose of solving the above problems, a porous membrane for secondary batteries including non-conductive particles, such as inorganic filler, is suggested to set on a surface of an electrode or an organic separator or inside the organic separator. With this porous membrane, strength of the organic separator or the electrode improves and its safety is increased.

Japanese Patent Laid-Open No. 2006-351316 describes a nonaqueous electrolyte for secondary batteries wherein a specific amide compound or imide compound is included in a positive electrode, a negative electrode or a separator. Japanese Patent Laid-Open No. 2010-9940 describes an electrode for secondary batteries or a nonaqueous electrolyte for secondary batteries wherein a binder, mainly composed of a water soluble polymer neutralized salt of a copolymer of methyl vinyl ether and maleic acids, is used. The patent publication US 6,830,657 shows hydrophobic dispersions of polymer particles stabilized by maleimide copolymers at high solid contents.

### SUMMARY OF THE INVENTION

According to a review of the present inventors, the separator including a specific amide compound or imide compound described in Japanese Patent Laid-Open No. 2006-351316 may shrink by heat generation, and thus the obtained secondary battery was less secure. Further, even when a binder described in Japanese Patent Laid-Open No. 2010-9940 is used for forming a porous membrane, it was difficult to control a shrinkage of the separator due to heat generation of batteries.

Thus, an object of the present invention is to provide slurry for secondary batteries used to manufacture a porous membrane, which is superior in a thermal shrinkage resistance.

The summary of the present invention for the purpose of solving the above problems is as follows.
[1] Slurry for secondary batteries comprising non-conductive particles and a water-soluble polymer, wherein
   the water-soluble polymer is a maleimide-maleic acid copolymer including a structural unit (a) shown by the below general formula (I) and a structural unit (b) shown by the below general formula (II), the maleimide-maleic acid copolymer includes 5 to 75 mol% of the structural unit (a) and 5 to 75 mol% of the structural unit (b), and a content of the water-soluble polymer is 5 to 15 mass% with respect to 100 mass% of a total solid content of the slurry for secondary batteries;

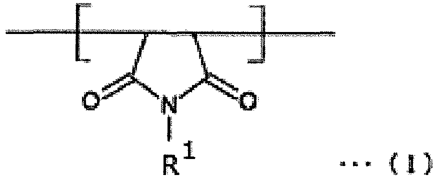

   ⁅X⁆ (II)

   in which "R¹" is hydrogen or a substitution group selected from the group consisting of an alkyl group having a carbon number of 1 to 6, a cycloalkyl group having a carbon number of 3 to 12, a phenyl group and a hydroxyphenyl group, and
   "X" is a residual group of maleic acid which may be neutralized with an ion other than hydrogen ion, dehydrated or esterified.
[2] The slurry for the secondary batteries as set forth in [1], wherein the maleimide-maleic acid copolymer further includes a structural unit (c) shown by the below general formula (III);

   ⁅Y⁆ ... (I I I)

   in which "Y" is a hydrocarbon skeleton having a carbon number of 2 to 12.
[3] The slurry for the secondary batteries as set forth in any one of [1] or [2], wherein the non-conductive particles are organic particles.
[4] A porous membrane for the secondary batteries obtainable by forming the slurry for the secondary batteries as set forth in any one of [1] to [3], to a membrane and drying thereof.
[5] An electrode for the secondary batteries, in which a current collector, an electrode active material layer and a porous membrane are laminated in this order, wherein
   the porous membrane is the porous membrane for the secondary batteries as set forth in [4].
[6] A separator for the secondary batteries, in which an organic separator and a porous membrane are laminated, wherein
   the porous membrane is the porous membrane for the secondary batteries as set forth in [4].
   the porous membrane for the secondary batteries as set forth in [4] is laminated on any one of the positive electrode, the negative electrode, and the organic separator.

The slurry for secondary batteries of the invention includes a specific water-soluble polymer. Thus, a porous membrane formed by such slurry is superior in a thermal shrinkage resistance. This leads to secondary batteries superior in safety can be obtained. In addition, a porous membrane formed by said slurries has a low water absorbency. Thus, secondary batteries superior in a cycle characteristic can be obtained. Further, a separator for secondary batteries and an electrode for secondary batteries each using such porous membrane are superior in reliability.

### DESCRIPTION OF EMBODIMENTS

### [Slurry for secondary batteries]

Slurry for secondary batteries of the present invention is a slurry composition for forming a porous membrane for secondary batteries described hereinafter. Hereinafter, the porous membrane for secondary battery may be referred to as "a porous membrane". Slurry for secondary batteries includes non-conductive particles and a water-soluble polymer of a specific composition, wherein solid contents of non-conductive particles, a water-soluble polymer, and arbitrary composition are uniformly dispersed in a disperse media.

### < Non-conductive particles >

Non-conductive particles used in the invention is desirable to be stably present under a used environment of secondary batteries (a lithium ion secondary battery, a nickel-hydrogen secondary battery, etc.), and to be electrochemically stable.

Various kinds of inorganic particles, organic particles, and the other particles can be used as the nonconductive particles. Among all, inorganic oxide particles and organic particles are preferable; and the organic particles is more preferable since they contain less contamination of metal ions or so in the particles. Hereinafter, said contamination maybe referred to as "metal foreign particles". Metal ions in particles sometimes form salts near electrodes; and this may increase internal resistance of electrode or decrease a cycle characteristic of the secondary batteries. Further, as the other particles, particles made to have an electrical insulation by surface treating with electrical non-conductive materials can be exemplified. Such particles may be fine powders of conductive metals, such as carbon black, graphite, SnO₂, ITO, metal powders, etc. or compounds or oxides each having conductivity. In the present invention, 2 kinds or more of the above particles may be used simultaneously as said nonconductive particles.

### Inorganic particles

Inorganic particles include inorganic oxide particles, such as aluminum oxide, silicon oxide, magnesium oxide, titanium oxide, BaTiO₂, ZrO, alumina-silica complex oxide; inorganic nitride particles such as aluminum nitride, boron nitride; covalent crystal particles such as silicone and diamond; slightly soluble ionic crystal particles such as barium sulphate, calcium floride, barium floride; and clay particulates such as talk, montmorillonite. These particles may be element substituted, surface treated, other than the surface treatment treated to the above-identified other particles, and solid-solution treated, if required. These particles may be a single or a combination of two kinds or more. Among all, inorganic oxide particles are preferable since stability in electrolyte solution and stability of the electric potential are superior.

Formations of inorganic particles are not particularly limited; and they can be a needle shape, a rod shape, a spindle shape, a plate shape and the like. In particular, said plate shape is preferable in view of effectively preventing penetration of a needle shaped substance.

In case when inorganic particles have a plate shape, a flat plate surface of the inorganic particles is preferable to be oriented approximately parallel to a surface of the porous membrane in the porous membrane. Short circuits of the obtained battery is preferably controlled when using such porous membrane. This is presumed due to the following reasons. The flat plate surfaces of the inorganic particles are oriented to partially overlap each other by orienting the inorganic particles as mentioned above. Thus, voids (through holes) from one surface to the other surface of the porous membrane is considered to be a bended form rather than a straight line; namely, a rate of surface aperture of the voids is considered large. With this, penetration of porous membrane by lithium dendrite can be prevented; and a generation of a short circuit can be preferably controlled.

Preferably used plate shaped inorganic particles may be various kinds of commercial products, e.g. "SUNLOVERY" (SiO₂) by AGC Si-Tech.Co.,Ltd., a crushed product of "NST-B1" (TiO₂) by ISHIHARA SANGYO KAISHA, LTD., a plate shaped barium sulphate "H series" and "HL series" by Sakai Chemical Industry Co., Ltd., "Micron White" (talk) by Hayashi Kasei Co., Ltd., "BENGEL" (bentonite) by Hayashi Kasei Co., Ltd., "BMM" or "BMT" (Boehmite) by KAWAI LIME INDUSTRY CO., LTD., "Sera Sur BMT-B" [alumina (Al₂O₃)] by KAWAI LIME INDUSTRY CO., LTD., "Seraph" (alumina) by KINSEI MATEC Co., Ltd. and "Hikawa Mica Z-20" (sericite) by Hikawa Mining Co., etc. are available. Further, SiO₂, Al₂O₃ and ZrO can be manufactured with the methods described in the publication of Japanese Patent Laid-Open No. 2003-206475.

An average particle diameter of inorganic particles is preferably within the range of 0.005 to 10µm, more preferably 0.1 to 5µm, and the most preferably 0.3 to 2µm. In case when average particle diameter of inorganic particles is within the above range, dispersing state of the slurry for secondary batteries become easily controlled; and thus, a uniform porous membrane having a predetermined thickness is easily manufactured. Further, an adhesive property with the below-mentioned binder also improves; and thus, inorganic particles are prevented from coming off even when porous membrane is wound. And a sufficient safety can be achieved even when the porous membrane is made thin. Further, a decrease of an ionic conductivity in a porous membrane can be prevented; since an increase of particle filling rate in the porous membrane can be prevented. In addition, the porous membrane of the present invention can be formed thin.

Note, an average particle diameter of the inorganic particles is obtained as following. 100 primary particles in an optional visual field are arbitrary selected from SEM (scanning electron microscope) image, analyzed thereof, and an average value of equivalent circle diameter of each particle is obtained.

Particle diameter distribution (CV value) of inorganic particles is preferably 0.5 to 40%, more preferably 0.5 to 30% and the most preferably 0.5 to 20%. In case when particle diameter distribution of inorganic particles is within the above range, predetermined voids between non-conductive particles can be maintained. Thus, it can prevent to be disincentive for lithium ions to move and prevent to increase the resistivity in the secondary battery of the present invention. Note, the particle diameter distribution of (CV value) inorganic particles is obtained as following. SEM observation was performed to inorganic particles. And particle diameter of 100 particles were measured, standard deviation of average particle diameter and of particle diameter were obtained, and then (a standard deviation of a particle diameter) / (an average particle diameter) was calculated. The bigger CV value is, the larger the deviation of the particle diameter is.

In concrete, BET specific surface area of inorganic particles of the invention is preferably 0.9 to 200m²/g and more preferably 1.5 to 150 m²/g, in view of preventing aggregation of inorganic particles and making its fluidity preferable.

### Organic particles

Organic particles having a functional group, which is cross-linkable with a functional group having the below-mentioned binder, such as hydrophilic group, is preferable. Dispersibility of non-conductive particles (organic particles) in slurry for secondary batteries improves by using such organic particles since it improves reactivity with the binder.

According to the organic particles of the present invention, a functional group, cross-linkable with a functional group of binder, is a functional group which can form a chemical bond with anion derived from the functional group of binder; and in concrete, an epoxy group, a N-methylol amide group, an oxazoline group, an allyl group, a isocyanate group, an oxetanyl group, an alkoxysilane group, etc. can be exemplified. Among all, an epoxy group, an allyl group and an alkoxysilane group are preferable, and an epoxy group is the most preferable; since they are highly reactive with the functional group in binder and easily form cross-linkage, and density of said cross-linkage can be easily controlled by changing temperature and time when forming the cross-linkage. Note that functional group having a cross-linkage property maybe one kind, or maybe two or more kinds.

In case when monomer having a functional group, which is cross-linkable with the functional group in binder, is used when manufacturing organic particles, a structural unit including said functional group can be introduced to organic particles. One or more of the functional group, which is cross-linkable with a functional group in binder, can be present in said monomer.

Note, "a structural unit" here defines a monomer unit constituting the polymer.

Examples of monomer having epoxy group include a monomer containing a carbon-carbon double bond and an epoxy group, a monomer containing a halogen atom and an epoxy group, and the like.

The monomers containing a carbon-carbon double bond and an epoxy group include; unsaturated glycidyl ether such as vinyl glycidyl ether, allyl glycidyl ether, butenyl glycidyl ether, o-allyl phenyl glycidyl ether and the like, monoepoxide of diene or polyene such as butadiene monoepoxide, chloroprene monoepoxide, 4,5-epoxy-2-pentene, 3,4-epoxy-1-vinylcyclohexene, 1,2-epoxy-5,9-cyclododecadiene and the like, alkenyl epoxide such as 3,4-epoxy-1-butene, 1,2-epoxy-5-hexene, 1,2-epoxy-9-decene and the like, glycidyl ester of unsaturated carboxylic acid such as glycidyl acrylate, glycidyl methacrylate, glycidyl crotonate, glycidyl-4-heptenoate, glycidyl sorbate, glycidyl linoleate, glycidyl-4-methyl-3-pentenoate, glycidyl ester of 3-cyclohexene carboxylic acid, glycidyl ester of 4-methyl-3-cyclohexene carboxylic acid and the like.

Examples of monomer containing halogen atom and epoxy group include epihalohydrin such as epichlorohydrin, epibromohydrin, epiiodohydrin, epifluorohydrin, ß-methyl epichlorohydrin and the like, p-chlorostyreneoxide and dibromo phenylglycidyl ether and the like.

A monomer containing N-methylol amide group includes (meth)acrylamide having methylol group such as N-methylol (meth)acrylamide and the like.

A monomer having oxazoline group includes 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, 2-isopropenyl-5-ethyl-2-oxazoline and the like.

A monomer having allyl group includes such as allyl acrylate, allyl methacrylate, allyl glycidyl ether and the like.

A monomer having isocyanate group includes such as vinyl isocyanate, allyl isocyanate, (meth)acrylic isocyanate, 2-(meth)acryloyloxyethylisocyanate, 2-isocyanatoethyl(meth)acrylate, m-isopropenyl-α, α-dimethylmethylbenzyl isocyanate and the like.

A monomer having oxetanyl group includes such as 3-((meth)acryloyloxymethyl)oxetane, 3-((meth)acryloyloxymethyl)-2-trifluoromethyloxetane, 3-((meth)acryloyloxymethyl)-2-phenyloxetane, 2-((meth)acryloyloxymethyl)oxetane, 2-((meth)acryloyloxymethyl)-4-trifluoromethyloxetane and the like.

A monomer having alkoxysilane group includes such as vinyltrimethoxysilane, vinyltriethoxysilane, methacryloxypropylmethyldimethoxysilane, methacryloxypropyltrimethoxysilane, methacryloxypropylmethyldiethoxysilane, methacryloxypropyltriethoxysilane, 3-methacryloxytriethoxysilan and the like.

A content of the functional group in organic particles is preferably 0.03 to 0.08mmol, and more preferably 0.005 to 0.05mmol per 1g of the organic particles. In case when content of said functional group in organic particles is within the above range, mobility of the functional group in organic particles will be sufficiently maintained, and thus reactivity with binder will be improved. Consequently, strength of a porous membrane can be improved.

The organic particles are preferable to further include a structural unit of a multifunctional vinyl monomer. Content ratio of a structural unit of the multifunctional vinyl monomer with respect to a total weight of the monomer in the organic particles is preferably 50 to 95 mass%, more preferably 60 to 95 mass%, and the most preferably 70 to 95 mass%. When a structural unit of a multifunctional vinyl monomer is included in organic particles, cross-linkage density in organic particles becomes high, followed by heat resistance improvement of organic particles; and that reliability of the obtained porous membrane for secondary batteries improves.

The multifunctional vinyl monomer includes a compound having two or more, preferably two copolymerizable double bonds in a molecular structure thereof can be exemplified. For instance, unconjugated divinyl compounds, represented by such as divinylbenzene, and multifunctional poly(meth)acrylate compounds, represented by such as trimethylolpropane trimethacrylate, trimethylolpropane triacrylate, etc., are exemplified.

The multifunctional(meth)acrylate compound includes diacrylate compounds such as polyethyleneglycoldiacrylate, 1,3-butyleneglycoldiacrylate, 1,6-hexaneglycoldiacrylate, neopentylglycoldiacrylate, polypropyleneglycoldiacrylate, 2,2'-bis(4-acryloyloxypropyloxyphenyl)propane, 2,2'-bis(4-acryloyloxydiethoxyphenyl)propane and the like, triacrylate compounds such as trimethylolpropanetriacrylate, timethylolethanetriacrylate, tetramethylolmethanetriacrylate and the like, tetraacrylate compounds such as tetramethylolmethanetetraacrylate and the like, dimethacrylate compounds such as ethyleneglycoldimethacrylate, diethyleneglycoldimethacrylate, triethyleneglycoldimethacrylate, polyethyleneglycoldimethacrylate, 1,3-butyleneglycoldimethacrylate, 1,4-butyleneglycoldimethacrylate, 1,6-hexaneglycoldimethacrylate, neopentylglycoldimethacrylate, dipropyleneglycoldimethacrylate, polypropyleneglycoldimethacrylate, 2,2'-bis(4-methacryloxydiethoxyphenyl)propane and the like, and trimethacrylate compounds such as trimethylolpropane trimethacrylate, trimethylolethane trimethacrylate and the like. Among all, ethyleneglycoldimethacrylate, trimethylol propanetrimethacrylate and divinylbenzene are preferablely used; and ethyleneglycoldimethacrylate and divinylbenzene are more preferably used. With the use of said ethyleneglycoldimethacrylate and divinylbenzene, organic particles having superior heat resistance can be obtained. Consequently, a safety of the obtained secondary batteries improves.

The organic particles may contain an arbitrary structural unit in addition to the above-mentioned 2 kinds of the structural units. The monomer (an arbitrary monomer) constituting an arbitrary structural unit includes aromatic monovinyl compounds, (meth)acrylic ester monomers, conjugated diene monomers, vinylester compounds, α-olefin compounds, cationic monomers and hydroxyl group containing monomer. Two kinds or more of the structural unit derived from such monomers may be included in the organic particles.

The aromatic monovinyl compounds include styrene, α-methylstyrene, fluorostyrene, vinyl pyridine and the like.

The acrylic acidestermonomers include butylacrylate, 2-ethylhexylethylacrylate, N-N'-dimethylaminoethylacrylate and the like.

The methacrylic acidester monoomers include butylmethacrylate, 2-ethylhexylmethacrylate, methylmethacrylate, 2-hydroxyethylmethacrylate, N,N'-dimethylaminoethylmethacrylate and the like.

The conjugated diene monomers include butadiene, isoprene and the like.

The vinylester compounds include vinyl acetate and the like.

The α-olefin compounds include 4-methyl-1-pentene and the like.

The cationic monomers include dimethyl aminoethyl(meth)acrylate, dimethyl aminopropyl(meth)acrylate, and the like.

The hydroxyl group containing monomers include unsaturated ethylene alcohol such as (meth)allyl alcohol, 3-butene-1-ol, 5-hexene-1-ol and the like, alkanolester of unsaturated ethylene carboxylic acid such as acrylic acid-2-hydroxyethyl, acrylic acid-2-hydroxypropyl, methacrylic acid-2-hydroxyethyl, methacrylic acid-2-hydroxypropyl, di-2-hydroxyethyl maleate, di-4-hydroxybutyl maleate, itaconic acid di2-hydroxypropyl and the like, ester of polyalkyleneglycol and (meth)acrylic acid shown by a general formula CH₂=CR'-COO-(CₙH₂ₙO)ₘ-H ("m" is an integral number from 2 to 9, "n" is an integral number from 2 to 4 and "R'" is hydrogen or methyl group), mono(meth)acrylic acid ester of dihydroxyester of dicarboxylic acid such as 2-hydroxyethyl-2'-(meth)acryloyl oxyphthalate, 2-hydroxyethyl-2'-(meth)acryloyl oxysuccinate and the like, vinyl ether such as 2-hydroxyethylvinyl ether, 2-hydroxypropylvinyl ether and the like, mono(meth)allyl ether of alkyleneglycol such as (meth)allyl-2-hydroxyethylether, (meth)allyl-2-hydroxypropylether, (meth)allyl-3-hydroxypropylether, (meth)allyl-2-hydroxybutylether, (meth)allyl-3-hydroxybutylether, (meth)allyl-4-hydroxybutylether, (meth)allyl-6-hydroxyhexylether and the like, polyoxyalkyleneglycol(meth) mono allyl ether such as diethyleneglycol mono(meth)allyl ether, dipropyleneglycol mono(meth)allyl ether and the like, mono(meth)allyl ether of halogen and hydroxy substituted product of (poly)alkyleneglycol, such as glycerin mono(meth)allyl ether, (meth)allyl 2-chloro-3-hydroxypropylether, (meth)allyl-2-hydroxy-3-chloropropylether and the like, mono(meth)allyl ether of polyphenol, such as eugenol, isoeugenol and the like, and their halogen substituted product, (meth)allyl thioether of alkyleneglycol such as (meth)allyl-2-hydroxyethylthioether, (meth)allyl-2-hydroxypropylthioether and the like.

The above-mentioned arbitrary monomer may be one of any kind, or may be a combination of two or more kinds. Among said arbitrary monomers, butylacrylate is particularly preferable, in view of reactivity with the multifunctional vinyl monomers such as ethyleneglycoldimethacrylate or divinylbenzene.

Content ratio of the structural unit in an arbitrary monomer unit with respect to a total weight monomer in organic particles is preferably 3 to 80 mass%, more preferably 4 to 70 mass %, and the most preferably 5 to 60 mass%.

Respective content ratio of the monomer having a functional group cross-linkable with a functional group in binder, the multifunctional vinyl monomer and the structural unit of an arbitrary monomer is within the above range; and a total of said content ratios is preferably 100 mass%.

### (Manufacturing method of organic particles)

Manufacturing method of organic particles is not particularly limited; and the method can be exemplified wherein the above-described monomer constituting the organic particles and the other arbitrary composition, if required, are dissolved or dispersed in a disperse media, and polymerized in a disperse liquid by an emulsifying polymerization method, a soap-free polymerization method or a dispersion polymerization method.

In said emulsifying polymerization, it is preferable to divide polymerization into several steps for obtaining desired particle diameter and an average degree of circularity. For instance, seed polymer particles are formed by polymerizing a part of monomer constituting organic particles at first, the other monomer is then absorbed to said seed polymer particles, and then polymerize in this state to manufacture organic particles (a seed polymerization method). In addition, when forming seed polymer particles, the polymerization may be further divided into several steps.

In concrete, for instance, seed polymer particles A is formed by using a part of monomer constituting organic particles; then seed polymer particles B, having a larger particle diameter, is formed by using said seed polymer particles A and the other monomer constituting the organic particles; and further, organic particles, having even larger particle diameter, can be formed by using said seed polymer particles B, the rest of the monomers constituting organic particles and the other arbitrary composition when required. As described, by forming seed polymer particles in a reaction of plural steps, and then forming the organic particles, there are advantages that desired particle diameter and average degree of circularity can be steadily obtained. Note, in this case, a monomer, having a functional group cross-linkable with a functional group of binder, is preferably used in a last step of the polymerization in general.

As described, polymerization may be separated into several steps, and that all the monomers constituting organic particles are not necessary be in a mixture state, when polymerized. When the polymerization is performed in several steps, a composition of structural unit of monomers constituting organic particles within the finally obtained organic particles is preferable to satisfy a preferable content ratio of the above-mentioned structural unit in monomers constituting organic particles.

Medium used for polymerization of monomer, constituting organic particles, includes water, organic solvent and their mixture. As for the organic solvent, a solvent inactive for radical polymerization, which does not inhibit polymerization of monomer, is used. Concrete examples of the organic solvent are alcohols such as methanol, ethanol, propanol, cyclohexanol, octanol and the like, esters such as dibutyl phthalate, dioctyl phthalate and the like, ketones such as cyclohexanone and the like, and their mixtures are exemplified. Preferably, aqueous medium and/or water is used as a disperse media, and emulsifying polymerization is performed as polymerization.

Amount ratio of seed polymer particles and monomer when reacting is as follows. Used amount of monomer with respect to 1 part by mass of seed polymer particles is preferably 2 to 19 parts by mass, more preferably 3 to 16 parts by mass and the most preferably 4 to 12 parts by mass. When used amount of monomer with respect to 1 part by mass of seed polymer particles is 2 parts by mass or more, mechanical strength and heat resistance of the obtained organic particles will be heightened. Further, when used amount of monomer with respect to 1 part by mass of seed polymer particles is 19 parts by mass or less, monomer can be efficiently absorbed to seed polymer particles, and that monomer amount not absorbed to the seed polymer particles can be maintained in a small range. Further, particle diameter of organic particles can be well controlled, and that generation of coarse particles having a wide range of particle diameter distribution or a large amount of fine particles can be prevented.

Specific handling of the polymerization includes a method, wherein a monomer is poured to an aqueous dispersion of seed polymer particles at once, and a method, wherein a monomer is separately or constantly added when conducting polymerization. It is preferable that monomer is absorbed to seed polymer particles, before polymerization begins and cross-linkage is substantially formed in the seed polymer particles.

Monomer will not be absorbed to seed polymer particles when said monomer is added at or after intermediate of the polymerization, which leads to a generation of a large amount of fine particles followed by a deterioration of polymerization stability, and polymerization reaction may not be maintained. Considering above, it is preferable that all the monomers may be added to seed polymer particles prior to polymerization, or all the monomers may be added before polymerize conversion rate reaches around 30%. In particular, it is preferable that monomer is added to an aqueous dispersion of seed polymer particles prior to the start of polymerization and stirred, and then polymerization begins after it is absorbed to the seed polymer particles.

An arbitrary composition can be added to the polymerization reaction system, in addition to a monomer constituting organic particles and disperse media. In concrete, a component of such as polymeric initiator, surfactant, suspension protecting agent and the like can be added.

As for polymeric initiator, although a general water-soluble radical polymeric initiator or oil-soluble radical polymeric initiator can be used, the water-soluble radical polymeric initiator is preferably used, since monomers not absorbed to seed polymer particles are unlikely to start polymerize in aqueous phase. A water-soluble radical polymeric initiator includes potassium persulfate, sodium persulfate, cumene hydroperoxide, hydrogen peroxide, and redox containing initiator, which is a combination of the above-mentioned water-soluble initiator or the below-mentioned oil-soluble initiator and reducing agent such as sodiumhydrogen bisulfate, and the like. Further, oil-soluble radical polymeric initiator includes benzoylperoxide, α, α'-azobisisobutyronitrile, t-butyl peroxy-2-ethylhexanoate, 3,5,5-trimethylhexanoyl peroxide and the like. Among the oil-soluble radical polymeric initiator, α, α'-azobisisobutyronitrile can be preferably used. Note that in the polymerization reaction, it is preferable to add a small amount of water-soluble polymerization inhibitor, such as potassium dichromate, ferric chloride, hydroquinone and the like, since generation of fine particles can be prevented.

Generally used surfactant can be used; and anion containing emulsifier, such as sodium dodecylbenzenesulfonate, sodium lauryl sulfate, sodium dialkyl sulfosuccinate, formalin condensation of naphthalenesulfonate and the like can be exemplified. Further, a combination use of non-ionic containing surfactant, such as polyoxyethylenenonylphenyl ether, polyethyleneglycolmonostearate, sorbitanmonostearate and the like, is possible. Preferable suspension protecting agent includes polyvinyl alcohol, carboxymethyl cellulose, sodium polyacrylate, fine powder inorganic compounds and the like.

According to the present invention, the most preferable combination use of the polymeric initiator and the stabilizer to obtain organic particles having a narrow particle diameter distribution of a particle diameter in object at high reproducibility is, water-soluble radical polymeric initiator for the polymeric initiator; and a surfactant, showing C.M.C. concentration (critical micelle concentration) or lower and near concentration thereof, which is 0.3 to 1.0 times the C.M.C. concentration in concrete, for the stabilizer.

### (Characteristics of organic particles)

A shape of organic particles according to the present invention is not particularly limited; and can be a spherical shape, an approximately spherical shape, a needle shape, a rod shape, a spindle shape, a plate shape and the like. However, a spherical shape, an approximately spherical shape, and a spindle shape are preferable. When organic particles show high heat resistance, heat resistance is provided to its porous membrane, and a reliability of the below-mentioned secondary battery electrode or secondary battery separator improves, which is preferable. In concrete, a temperature in which weight reduction ratio of organic particles reaches 10 mass%, when heated at a temperature rising rate of 10°C/min. by a thermobal anceana analysis under a nitrogen atmosphere, is preferably 250 °C or more, more preferably 300 °C or more, and the most preferably 360 °C or more. On the other hand, although upper limit of the temperature is not particularly limited, it may be 450 °C or less.

An average particle diameter of organic particles is preferably 0.005 to 10 µm, more preferably 0.1 to 5 µm, and the most preferably 0.3 to 2 µm. In case when an average particle diameter of organic particles is within the above range, dispersing state of slurry for secondary batteries become easily controlled, and that a uniform porous membrane having a predetermined thickness can be easily manufactured. Further, an increase of particle filling rate in the porous membrane can be prevented; and that decrease in ion conductivity in a porous membrane can be prevented and a superior cycle characteristic can be realized. In case when an average particle diameter of organic particles is within a range of 0.3 to 2µm, it is particularly preferable since it is superior in dispersibility, ease in coating and in control of voids. Average particle diameter can be obtained from an average value calculated from (a+b)/2, wherein "a" is a maximal length and "b" is a minimal length of particle images of 100 particles, which were SEM observed.

Average degree of circularity of organic particles is preferably 0.900 to 0.995, more preferably 0.91 to 0.98, and the most preferably 0.92 to 0.97. In case when an average degree of circularity of organic particles is within the above-range, contact area between organic particles can be suitably maintained, and that strength and heat resistance of a porous membrane can be improved. As a result, reliability of secondary batteries using said porous membrane can be improved.

For BET specific surface area of organic particles used in the invention, in particular, 0.9 to 200 m²/g is preferable, and 1.5 to 150 m²/g is more preferable, in order to prevent aggregation of organic particles and to show preferable fluidity of slurry for the secondary batteries.

Particle diameter distribution of organic particles is preferably 1.00 to 1.4, more preferably 1.00 to 1.3, and the most preferably 1.00 to 1.2. In case when particle diameter distribution of the organic particles is within the above range, predetermined void can be maintained between organic particles, and that movement of lithium in secondary batteries of the invention can be inhibited and resistance growth can be prevented. Note that particle diameter distribution of organic particles can be obtained from a ratio V/N, wherein "V" is a volume average particle diameter and "N" is a number average particle diameter, after particle diameter measurement was performed with Laser Diffraction Scatter Particle Diameter Distribution Measuring Device (LS230) by Beckman Co., Ltd. Note that measurements by Laser Diffraction Scatter Method is performed by a wet method.

In the invention, organic particles having content of metallic foreign particles of 100ppm or less is preferably used. This is to decrease metallic foreign particles that provide negative influence on a battery performance. In case when organic particles including many metallic foreign particles with metallic ions are used, said metallic foreign particles elute in slurry for secondary batteries, which are ion cross-linkable with polymers in slurry for secondary batteries, leading to an aggregation of the slurry for secondary batteries, and as a result, porous property of a porous membrane is lowered. Therefore, rate characteristic (power output characteristic) of secondary batteries using the porous membrane is at a risk of deterioration. Said metals are particularly unfavorable to contain Fe, Ni, Cr and the like, which are ionizable. Therefore, a metal content in organic particles is preferably 100 ppm or less, more preferably 50 ppm or less. Less the above-described content means less deterioration in battery characteristic. Here, "metallic foreign particles" define metals alone, other than organic particles. A content of metallic foreign particles in organic particles can be measured with ICP (Inductively Coupled Plasma).

A content ratio of non-conductive particles with respect to 100 mass% of a total solid content of slurry for secondary batteries is preferably 60 to 99 mass%, more preferably 65 to 98 mass%, and the most preferably 70 to 98 mass%. In case when content ratio of the non-conductive particles is within the above range, a porous membrane showing a high heat stability can be obtained. In addition, in case when density of the non-conductive particles is large, removal (powder falls) of non-conductive particles from the porous membrane can be prevented, a porous membrane with a high strength can be obtained, and a decrease in battery characteristics, such as a cycle characteristic, can be prevented.

### < Water-soluble polymer >

A water-soluble polymer used in the invention is a maleimide-maleic acid copolymer incuding a structural unit (a) shown by the following general formula (I) and a structural unit (b) shown by the following general formula (II). Here, "a water-soluble polymer" is a polymer in which insoluble component is less than 0.5 mass%, when 0.5g of said polymer is dissolved in 100g of water at 25°C.

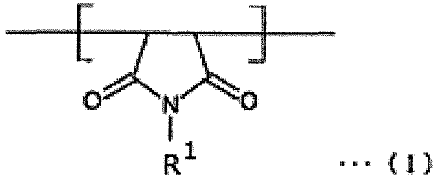

⁅X⁆ ... (I I)

Here, "R¹" is hydrogen or a substitution group selected from the group consisting of an alkyl group having a carbon number of 1 to 6, cycloalkyl group having a carbon number of 3 to 12, phenyl group and hydroxyphenyl group. "X" refers to residual groups of maleic acid, which may be neutralized with ion other than hydrogen ion, dehydrated or esterified.

With the use of water-soluble polymer having the above-mentioned structural units (a) and (b), a porous membrane for secondary batteries superior in a thermal shrinkage resistance can be obtained. Thus, safety of secondary batteries using said porous membrane can be improved. In addition, with the use of the water-soluble polymer having the above-mentioned structural units (a) and (b), a low water absorbable porous membrane can be formed. Thus, expansion of secondary battery by decomposition of electrolyte due to residual water is inhibited, and secondary batteries superior in a cycle characteristic can be obtained.

### Structural unit (a)

Structural unit (a) is a structural unit having maleimide skeleton shown by the above-mentioned general formula (I). This structural unit may be derived from maleimide shown by the following general formula (I-1) or may be obtained by imidization of the below-mentioned structural unit (b).

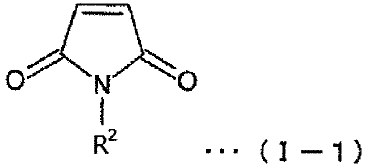

Here, "R²" is hydrogen or a substitution group selected from the group consisting of an alkyl group having a carbon number of 1 to 6, cycloalkyl group having a carbon number of 3 to 12, phenyl group and hydroxyphenyl group.

Specific examples of a compound derived from structural unit (a) expressed by a general formula (I-1) are maleimide, N-methyl maleimide, N-ethyl maleimide, N-propyl maleimide, N-butyl maleimide, N-pentyl maleimide, N-hexyl maleimide; N-phenylmaleimide, N-(2-methylphenyl)maleimide, N-(3-methylphenyl)maleimide, N-(4-methylphenyl)maleimide, N-(2-ethylphenyl)maleimide, N-(3-ethylphenyl)maleimide, N-(2-N-propylphenyl)maleimide, N-(2-i-propylphenyl)maleimide, N-(2-N-butylphenyl)maleimide, N-(2,6-dimethylphenyl)maleimide, N-(2,4,6-trimethylphenyl)maleimide, N-(2,6-diethylphenyl)maleimide, N-(2,4,6-triethylphenyl)maleimide, N-(2-methoxyphenyl)maleimide, N-(2,6-dimethoxyphenyl)maleimide, N-(2-bromophenyl)maleimide, N-(2-chlorophenyl)maleimide, N-(2,6-dibromophenyl)maleimide; N-(4-hydroxyphenyl)maleimide, etc. Among all, maleimide is preferable in view of reactivity with non-conductive particles. Such maleimide deriving structural unit (a) can be used alone or in combination of two or more.

### Structural unit (b)

Structural unit (b) is a structural unit having maleic skeleton shown by the above-mentioned general formula (II). Structural unit (b) may be neutralized with ion other than hydrogen ion, dehydrated or esterified. This structural unit may be derived from maleic acids shown by the following general formula (II-1) or maleic anhydrides shown by the following general formula (II-2).

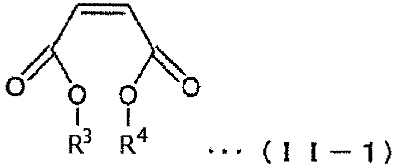

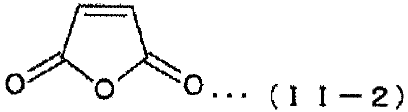

Here, "R³" and "R⁴" may be the same or different, and are hydrogen, an alkyl group, an alkaline metal ion, an alkaline earth metal ion, an ammonium ion, alkylamine or alkanolamine.

Specific examples of a compound derived from structural unit (b) expressed by general formula (II-1) are maleic esters and/or maleic salts.

Said maleic esters include monomethyl maleate, dimethyl maleate, monoethyl maleate, diethyl maleate, monopropyl maleate, dipropyl maleate, etc.

Said maleic salts include alkaline metal salts of maleic acid such as monolithium maleate, dilithium maleate, monosodium maleate, disodium maleate, monopotassium maleate, dipotassium maleate, etc.; an alkaline earth metal salts of maleic acid such as calcium maleate, magnesium maleate, etc.; ammonium salts of maleic acid such as monoammonium maleate, diammonium maleate, etc.; alkylamine salts of maleic acid such as monomethyl ammonium maleate, bismonomethyl ammonium maleate, monodimethyl ammonium maleate, bisdimethyl ammonium maleate, etc.; alkanolamine salts of maleic acid such as 2-hydroxyethylammonium maleate, bis-2-hydroxyethylammonium maleate, di(2-hydroxyethyl)ammonium maleate, bisdi(2-hydroxyethyl)ammonium maleate, etc.

Specific example of a compound derived from structural unit (b) expressed by general formula (II-2) is maleic anhydride.

Such maleic acids or maleic anhydrides deriving the above structural unit (b) can be used alone or in combination of two or more.

### Structural unit (c)

Maleimide-maleic acid copolymer of the present invention is preferable to include structural unit (c) in addition to the above structural units (a) and (b). Inclusion of structural unit (c) can reduce water absorbency of the porous membrane for secondary batteries; and thus, a cycle characteristic of the secondary batteries improves.

The structural unit (c) includes a hydrocarbon skeleton shown by the following general formula (III).

⁅Y⁆ ... (I I I)

Here, "Y" is a hydrocarbon skeleton having a carbon number of 2 to 12.

Specific examples of a compound deriving structural unit (c), as hydrocarbon compounds, are olefin hydrocarbons such as ethylene, 1-butene, isobutene, 1-hexene, 4-methyl-1-pentene, 1-heptene, 1-octene, di-isobutylene, 1-nonene, 1-decene and 1-dodecene, etc.; and aromatic hydrocarbons such as styrene, α-methylstyrene, etc. Such compounds deriving structural unit (c) can be used alone or in combination of two or more.

### Maleimide-maleic acid copolymer

Maleimide-maleic acid copolymer of the invention includes the above structural unit (a) for 5 to 75 mol%, preferably 10 to 60 mol%, and more preferably 15 to 45 mol%. In case when a content ratio of structural unit (a) in maleimide-maleic acid copolymer is within the above rage, a porous membrane for secondary batteries further superior in a thermal shrinkage resistance can be obtained. In addition, a binding property with non-conductive particles improves. Furthermore, a swelling property of the water-soluble polymers with respect to electrolyte used for secondary batteries is lowered; thus, secondary batteries superior in a cycle characteristic can be obtained.

Maleimide-maleic acid copolymer of the invention includes the above structural unit (b) for 5 to 75 mol%, preferably 10 to 60 mol%, and more preferably 15 to 45 mol%. In case when a content ratio of structural unit (b) in maleimide-maleic acid copolymer is within the above rage, a porous membrane for secondary batteries further superior in a thermal shrinkage resistance can be obtained. Further, a lower water absorbable porous membrane can be formed and an expansion of the secondary batteries by decomposition of electrolyte due to residual water can be prevented; thus, secondary batteries superior in a cycle characteristic can be obtained.

Maleimide-maleic acid copolymer includes the above structural unit (c) for preferably 20 to 90 mol%, more preferably 30 to 75 mol%, and the most preferably 40 to 60 mol%. In case when a content ratio of structural unit (c) in maleimide-maleic acid copolymer is within the above rage, a thermal resistance of maleimide-maleic acid copolymer further improves, and a separator for the secondary batteries of the invention shows superior thermal shrinkage resistance. Further, water absorbency of porous membrane for secondary batteries of the invention is further reduced; and a cycle characteristic of the secondary batteries improves.

Unless an expression of effect according to the present invention is not inhibited, maleimide-maleic acid copolymer may include, in addition to the structural units (a) to (c), a structural unit of an arbitrary monomer polymerizable with a monomer constituting the structural units thereof.

It is preferable that each content ratios of the above structural unit (a), structural unit (b) and structural unit (c) are within the above preferable rages, and a total content ratio thereof is 100 mol%.

Maleimide-maleic acid copolymer of the invention preferably shows a weight-average molecular weight of 50,000 to 100,000, in terms of polystyrene. This is measured by gel permeation chromatography (GPC) using N, N-dimethylformamide (DMF) as a developing liquid.

Manufacturing methods of maleimide-maleic acid copolymer of the invention include: a manufacturing method A wherein maleimide shown by the above general formula (I-1) and a maleic acid shown by the above general formula (II-1) or a maleic anhydride shown by (II-2) are polymerized; a manufacturing method B wherein a maleic acid shown by the above general formula (II-1) or a maleic anhydride shown by (II-2) are polymerized, structural units of said maleic acid or maleic anhydride is partly maleamic oxidized by ammonia or a compound having a substitution group "R²" of general formula (I-1), and then partly cyclodehydrated (imidized).

Polymerization method of manufacturing method A can be any well-known method; however a solution polymerization method is preferable since a homogeneous polymerization is preferable. Solutions used for a solution polymerization method include methanol, isopropylalcohol, isobutylalcohol, acetone, methylethylketone, methylisobutylketone, cyclohexanone, ethyl acetate, butyl acetate, ethyl lactate, tetrahydrofuran, dioxane, butyl cellosolve, dimethylformamide, dimethyl sulfoxide, benzene, ethylbenzene, toluene, xylene, cyclohexane, ethylcyclohexane, acetonitrile and the like. Such solutions can be used alone or in combination of two or more kinds. Note such solutions can be preliminary dehydrated.

In addition, used amount of the solution is 600 parts by mass or less, preferably 400 mass parts by weight, with respect to 100 parts by mass of a total amount of the maleimide and the maleic acid or the maleic anhydride. In case when it exceeds 600 parts by mass, a molecular amount of thus obtained copolymer becomes small; and this is unfavorable. Lower limit thereof is not particularly limited if a solution can be formed.

Polymerization is performed by injecting the above polymerization raw materials in a reaction vessel. For said polymerization, it is preferable to preliminary remove dissolved oxygen out of the reaction system by such as vacuum deairing, nitrogen substitution, etc. Further, polymerization temperature is preferably within a range of -50 to 200°C; and polymerization time is preferably within a range of 1 to 100 hours, in order to effectively proceed the reaction. Polymerization temperature of 50 to 150 °C and polymerization time of 1 to 50 hours are more preferable considering easiness of polymerization control and productivity thereof.

In manufacturing method B, compounds having a substitution group "R²" of general formula (I-1) include a primary amine having the substitution group "R²" such as aminophenol, normal-butylamine, etc.

One oncrete example of manufacturing method B will be described below as a manufacturing method B-1. Isobutylene-maleic anhydride copolymer and aminophenol are reacted in an organic solvent such as dimethyl formaldehyde, at a reaction temperature of generally 40 to 150 °C, preferably 50 to 100 °C for 1 to 20 hours. Maleic anhydride component is partly changed to N-(hydroxyphenyl)maleamic acid component. An azeotropic solvent, such as toluenthe, xylene, etc., is then added in order to remove generated water by cyclodehydration. Cyclodehydration reaction was performed at a reaction temperature of generally 80 to 200 °C, preferably 100 to 150 °C for 1 to 20 hours. And maleimide-maleic acid copolymer 1 is obtained.

The other concrete example of manufacturing method B will be described below as a manufacturing method B-2. Isobutylene-maleic anhydride copolymer and aminophenol are reacted in an organic solvent such as dimethyl formaldehyde, at a reaction temperature of generally 40 to 150 °C, preferably 50 to 100 °C for 1 to 20 hours. An azeotropic solvent, such as toluenthe, xylene, etc., is then added; and reaction was performed at a reaction temperature of generally 80 to 200 °C, preferably 100 to 150 °C for 1 to 20 hours. Maleic anhydride component is partly changed to N-(hydroxyphenyl)maleamic acid component, and cyclodehydration reaction was performed. Maleimide-maleic acid copolymer 2 is then obtained.

The other concrete example of manufacturing method B will be described below as a manufacturing method B-3. Isobutylene-maleic anhydride copolymer and aminophenol are reacted in an organic solvent such as dimethyl formaldehyde, at a reaction temperature of generally 80 to 200 °C, preferably 100 to 150 °C for 1 to 20 hours. Maleic anhydride component is partly changed to N-(hydroxyphenyl)maleamic acid component, and cyclodehydration reaction was performed. Maleimide-maleic acid copolymer 3 is then obtained.

In any method among the above manufacturing methods (B-1) to (B-3), azeotropic solvent is not used in the cyclodehydration reaction; and generally, generated water can be removed at a reaction temperature of 100 to 200 °C and dehydrated reaction can be effectively performed by a flow of nitrogen gas.

Azeotropic solvents used for removing generated water from the above cyclodehydration reaction include benzene, toluene, xylene, etc. Used amount of said azeotropic solvents an be an amount sufficient for an azeotropic removal of the generated water; 1 mole of this water generates from 1 mole of N-(hydroxyphenyl)maleamic acid, generated from a reaction of maleic anhydride component and aminophenol in isobutylene-maleic anhydride copolymer.

In case when a reaction of isobutylene-maleic anhydride copolymer and aminophenol is performed with 2 steps when manufacturing maleimide-maleic acid copolymer according to the invention, as is the same with the above manufacturing methods (B-1) and (B-2), a reaction temperature of the first reaction step of isobutylene-maleic anhydride copolymer and aminophenol generating copolymer of N-(hydroxyphenyl)maleamic acid is generally within a range of 40 to 150 °C and preferably within a range of 50 to 100 °C. In addition, it is preferable to set a reaction temperature of the second reaction, wherein a copolymer of N-(hydroxyphenyl)maleamic acid is cyclodehydrated, and a reaction temperature of the first step, wherein isobutylene-maleic anhydride copolymer and aminophenol are reacted under a presence of an azeotropic solvent for dehydration, both normally within a range of 80 to 200 °C, more preferably 100 to 150°C.

In addition, in the above manufacturing methods of (B-1) to (B-3), a reaction time of isobutylene-maleic anhydride copolymer and aminophenol is varied according to the reaction temperature, used amount of aminophenol, and an objective reaction rate. Said reaction rate is a modification rate of maleic anhydride component to N-(hydroxyphenyl)maleimide in isobutylene-maleic anhydride copolymer. Said reaction time is, however, generally 1 to 20 hours in a first reaction step generating copolymer of N-(hydroxyphenyl)maleamic acid, and generally 1 to 20 hours in a second reaction step wherein said copolymer is cyclodehydrated.

Further, a reaction time, when reacted with one step, is generally 1 to 20 hours under a presence of azeotropic solvents.

In the above manufacturing methods of (B-1) to (B-3), a content ratio of a constitutional unit (structural unit (a)) of maleimide in the objective maleimide-maleic acid copolymers 1 to 3 can be easily controlled by suitably selecting used amount of aminophenol, a reaction temperature and a reaction time.

After the reaction, collection of maleimide-maleic acid copolymers 1 to 3 from the reaction solution can be easily performed by a deposition of a polymer using inert solvents such as water and ethers.

Maleimide-maleic acid copolymers 1 to 3 obtained as mentioned above can be solubilized in water such as by hydrolyzing or neutralizing structural unit (b) in said copolymer. In concrete, the following methods can be exemplified: (1) a method wherein a structural unit of maleic anhydride in maleimide-maleic acid copolymers 1 to 3 is hydrolyzed at a high temperature of 80 to 100 °C and (2) a method wherein a structural unit of maleic acid in maleimide-maleic acid copolymers 1 to 3 is neutralized with a neutralizing agent. Note, it is preferable to add a neutralizing agent when hydrolyzing in the above method (1). Further, a temperature when adding the neutralizing agent is not particularly limited, and it may be a room temperature.

Examples of said neutralizing agent are hydroxides including alkali metal hydroxides such as lithium hydroxide, sodium hydroxide, potassium hydroxide and the like, alkali earth metal oxides such as calcium hydroxide, magnesium hydroxide, barium hydroxide and the like, and hydroxide of metals which belong to IIIA group of a long periodic table such as aluminum hydroxide; carbonates including alkali metal carbonates such as sodium carbonate, potassium carbonate and the like and alkaline-earth metal carbonates such as magnesium carbonate and the like; and organic amines. Examples of said organic amines are alkyl amines such as ethyl amine, diethyl amine and propyl amine and the like, alcohol amines such as monomethanol amine, monoethanol amine, monopropanol amine and the like, ammonia such as aqueous ammonia are exemplified. Among all, sodium salts, lithium salts, ammonium salts are preferable considering a high solubility effect to water.

According to the invention, a content ratio of the water-soluble polymer with respect to 100 mass% of a total solid content of slurry for secondary batteries is 5 to 15 mass%. In case when a content ratio of the water-soluble polymer is within the above range, a porous membrane of the invention is strengthened; thus, voids of the porous membrane can be sufficiently secured. As a result, secondary batteries superior in reliability and in a cycle characteristic can be obtained. Here, said void is a partial gap generated between resin component and non-conductive particles.

### <Arbitrary compositions>

In slurry for secondary batteries of the invention may include, in addition to the above components, a binder, an isothiazoline-based compound, a chelate compound, a pyrithione compound, a dispersant, a leveling agent, an antioxidant, a thickener, an antifoaming agent, an electrolyte additive such can function as an electrolyte decomposition inhibitor, and the like may be included. These are not particularly limited, if they do not effect battery reaction.

### Binder

Binder of the invention is preferable to include a structural unit having a hydrophilic group. In the present invention, said hydrophilic group is a functional group detaching proton in water or an aqueous solvent and its salt in which proton is substituted with cation. In particular, carboxylic acid group, sulfonate group, phosphate group, hydroxyl group and salts thereof can be exemplified.

Introduction of hydrophilic group in a polymer constituting binder improves an adhesive property between non-conductive particles and between non-conductive particles and a substrate mentioned hereinafter. Thus, removal (powder fall) of non-conductive particles during manufacturing process of porous membrane can be reduced.

A structural unit having the hydrophilic group in a binder, with respect to a total structural unit thereof, is preferably 0.2 to 10 mass%, more preferably 0.5 to 8 mass%, and the most preferably 1 to 6 mass%. In case when a content ratio of the structural unit having the hydrophilic group is within the above range, adhesive strength and stability of binder can be improved. One or more of the hydrophilic group can be contained in one structural unit.

Introduction of hydrophilic group in binder is preferably performed by polymerizing monomers including carboxylic acid group, sulfonate group, phosphate group, hydroxyl group and salts thereof.

Examples of monomer having carboxyl group include monocarboxylic acid and derivatives thereof, and dicarboxylic acid and derivatives thereof. Examples of the monocarboxylic acid include acrylic acid, methacrylic acid, crotonic acid and the like. Examples of the monocarboxylic acid derivatives include 2-ethylacrylic acid, isocrotonic acid, α-acetoxyacrylic acid, ß-trans-aryloxyacrylic acid, α-chloro-ß-E-methoxyacrylic acid, ß-diaminoacrylic acid and the like. Examples of the dicarboxylic acid include maleic acid, fumaric acid, itaconic acid and the like. Examples of the dicarboxylic acid derivatives include methylallyl maleate, such as methyl maleate, dimethyl maleate, phenyl maleate, chloromaleate, dichloromaleate and fluoromaleate and the like, and ester maleate, such as diphenyl maleate, nonyl maleate, decyl maleate, dodecyl maleate, octadecyl maleate, fluoroalkyl maleate and the like. Further, acid anhydrides generating a carboxyl group by hydrolysis may also be used. Examples of acid anhydrides of dicarboxylic acid include maleic anhydride, acrylic anhydride, methylmaleic anhydride, dimethyl maleic anhydride and the like.

Examples of monomer having sulfonate group include vinyl sulfonic acid, methylvinyl sulfonic acid, (meth)allylsulfonic acid, styrene sulfonate, (meth)acrylic acid-2-ethyl sulfonate, 2-acrylamide-2-methylpropanesulfonic acid, 3-allyloxy-2-hydroxypropane sulfonic acid and the like.

Examples of monomer having phosphate group include phosphate-2-(meth)acryloyloxyethyl, phosphate methyl-2-(meth)acryloyloxyethyl, phosphate ethyl(meth)acryloyloxyethyl and the like.

Examples of monomer having hydroxyl group include unsaturated ethylene alcohol such as (meth)allyl alcohol, 3-butene-1-ol, 5-hexene-1-ol and the like; alkanolester of unsaturated ethylene carboxylic acid such as acrylic acid-2-hydroxyethyl, acrylic acid-2-hydroxypropyl, methacrylic acid-2-hydroxyethyl, methacrylic acid-2-hydroxypropyl, di-2-hydroxyethyl maleate, di-4-hydroxybutyl maleate, itaconic acid di-2-hydroxypropyl and the like; ester of polyalkyleneglycol and (meth)acrylic acid shown by a general formula CH₂=CR'-COO-(CₙH₂ₙO)ₘ-H ("m" is an integral number from 2 to 9, "n" is an integral number from 2 to 4 and "R'" shows hydrogen or methyl group), mono(meth)acrylic acid ester of dihydroxyester of dicarboxylic acid such as 2-hydroxyethyl-2'-(meth)acryloyl oxyphthalate, 2-hydroxyethyl-2'-(meth)acryloyl oxysuccinate and the like; vinyl ether such as 2-hydroxyethylvinyl ether, 2-hydroxypropylvinyl ether and the like; mono(meth)allyl ether of alkyleneglycol such as (meth)allyl-2-hydroxyethylether, (meth)allyl-2-hydroxypropylether, (meth)allyl-3-hydroxypropylether, (meth)allyl-2-hydroxybutylether, (meth)allyl-3-hydroxybutylether, (meth)allyl-4-hydroxybutylether, (meth)allyl-6-hydroxyhexylether and the like; polyoxyalkyleneglycol(meth)mono allyl ether such as diethyleneglycol mono(meth)allyl ether, dipropyleneglycol mono(meth)allyl ether and the like, mono(meth)allyl ether of halogen and hydroxy substituted product of (poly)alkyleneglycol, such as glycerin mono(meth)allyl ether, (meth)allyl 2-chloro-3-hydroxypropylether, (meth)allyl-2-hydroxy-3-chloropropylether and the like; mono(meth)allyl ether of polyphenol, such as eugenol, isoeugenol and the like, and their halogen substituted product; (meth)allyl thioether of alkyleneglycol such as (meth)allyl-2-hydroxyethylthioether, (meth)allyl-2-hydroxypropylthioether and the like.

Among all, the hydrophilic group is preferably carboxylic acid group or sulphonic acid group due to their superiority in adhesive property with the below-mentioned electrode activating layer or organic separator. Carboxylic acid group is the most preferable due to their efficiency to capture transition metal ion, which may be dissolved from cathode activator. Therefore, among all, monocarboxylic acid such as acrylic acid or methacrylic acid, which includes a carboxylic acid group and has a carbon number of 5 or less, or dicarboxylic acid such as maleic acid or itaconic acid, which includes two or more carboxylic acid groups and has a carbon number of of 5 or less, are preferable for the monomer having a hydrophilic group. Further, acrylic acid or methacrylic acid is particularly preferable considering a good preservation stability of manufactured slurry for the secondary batteries.

Binder of the present invention is preferable to further include a structural unit of (meth)acrylic acid ester monomer. In case when the binder includes a structural unit of (meth)acrylic acid ester monomer, the binder does not elute to electrolyte of the secondary battery, and shows suitable swelling property to said electrolyte. Thus, conductivity of lithium ion can be satisfactorily maintained. As a result, a cycle characteristic of secondary batteries can be improved.

Content ratio of the structural unit of (meth)acrylic acid ester monomer with respect to a total structural unit of binder is preferably 50 to 98 mass%, more preferably 60 to 97.5 mass%, and the most preferably 65 to 95 mass%. In case when a content ratio of the structural unit of (meth)acrylic acid ester monomer is within the above range, motility of the polymers can be suitably maintained. Thus, dispersion stability of non-conductive particles and flexibility of porous membrane can be improved. Further, it is also possible to improve a cycle characteristic of the secondary batteries.

Examples of the (meth)acrylic ester monomer include alkyl ester acrylate such as methyl acrylate, ethylacrylate, n-propylacrylate, isopropylacrylate, n-butylacrylate, t-butylacrylate, pentylacrylate, hexylacrylate, heptylacrylate, octylacrylat, 2-ethylhexyl acrylate, nonylacrylate, decylacrylate, laurylacrylate, n-tetradecylacrylate, stearylacrylate and the like; and methacrylic acid alkyl ester such as methylmethacrylate, ethylmethacrylate, n-propylmethacrylate, isopropylmethacrylate, n-butylmethacrylate, t-butylmethacrylate, pentylmethacrylate, hexylmethacrylate, heptylmethacrylate, octylmethacrylate, 2-ethylhexylmethacrylate, nonylmethacrylate, decylmethacrylate, laurylmethacrylate, n-tetradecylmethacrylate, stearylmethacrylate and the like. Among all, ethyl(meth)acrylate, n-butyl(meth)acrylate, 2-ethylhexyl(meth)acrylate and lauryl(meth)acrylate, having a carbon number of alkyl group bonded to none-carbonyl oxygen atom of 2 to 13, are preferable; and n-butyl(meth)acrylate and 2-ethylhexyl(meth)acrylate, having a carbon number in alkyl group bonded to none-carbonyl oxygen atom of 4 to 10, are more preferable. This is because these do not elute to electrolyte, and show conductivity of lithium ion by moderate swelling to electrolyte; and in addition, a cross-link aggregation of the polymer hardly occurs when dispersing non-conductive particles.

In addition, binder of the invention is preferable to further include structural unit of α, β-unsaturated nitrile monomer. Inclusion of the structural unit of α, 6-unsaturated nitrile monomer improves binder strength.

A content ratio of structural unit of α, 6-unsaturated nitrile monomer in a total structural unit of binder is preferably 1.0 to 50 mass%, more preferably 2.5 to 40 mass% and the most preferably 5 to 35 mass%. In case when the content ratio of the structural unit of α, β-unsaturated nitrile monomer is within the above range, mobility of a polymer can be suitably maintained; and dispersing stability of non-conductive particles and flexibility of a porous membrane improve. Further, it is also possible to improve a cycle characteristic of the secondary batteries.

Examples of α,β**-**unsaturated nitrile monomer include acrylonitril and methacrylonitrile.

Further, binder of the present invention is preferable to include, in addition to the above-mentioned structural unit, the other structural unit copolymerizable with the above-mentioned structural unit. Said above-mentioned structural units include a structural unit having a hydrophilic acid group, a structural unit having (meth)acrylic ester monomer and a structural unit having α,β-unsaturated nitrile monomer. Content ratio of the other structural unit with respect to a total structural unit of binder is preferably 0.1 to 10 mass% and more preferably 0.1 to 5 mass%. In case when a content ratio of the other structural unit is within the above range, dispersibility of non-conductive particles does not decrease and a uniform porous membrane can be formed.

Monomers (the other monomers) constituting the other structural unit exemplify styrene series monomers such as styrene, chlorostyrene, vinyltoluene, t-butylstyrene, vinylbenzoate, vinylbenzoatemethyl, vinylnaphthalene, chloromethylstyrene, α-methylstyrene, divinylbenzen and the like; olefin such as ethylene, propylene and the like; diene series monomers such as butadiene, isoprene and the like; halogen atom containing monomers such as vinyl chloride, vinylidene chloride and the like; vinyl esters such as vinyl acetate, propionate vinyl, butyrate vinyl and the like; vinyl ethers such as methylvinyl ether, ethylvinyl ether, butylvinyl ether and the like; vinyl ketons such as methylvinyl ketone, ethylvinyl ketone, butylvinyl ketone, hexylvinyl ketone, isopropenylvinyl ketone and the like; heterocycle containing vinyl compounds such as N-vinyl pyrolidone, vinyl pyridine, vinyl imidazole and the like; amide series monomer such as acrylamide and the like; unsaturated glycidyl ethers such as vinylglycidyl ether, allylglycidyl ether, butenylglycidyl ether, o-allylphenyl glycidyl ether and the like; glycidyl esters of unsaturatedcarboxylic acid such as glycidyl acrylate, glycidyl methacrylate and the like; (meth)acrylamide having methylol group such as N-methylol(meth)acrylamide and the like; and monomers having an allyl group such as allyl acrylate, allyl methacrylate, allyl glycidyl ether and the like. Note that the binder may include the other structural unit of a kind, or a combination of two or more kinds in an arbitrary ratio.

Binder of the invention is used in a dispersed liquid state dispersed in disperse media (water or aqueous solvents) or in a solution state dissolved in the solution (hereinafter, they are collectively described as "binder disperse liquid"). In the invention, water is preferably used as the disperse media since they are superior in view of environmental protection standpoint, and fast drying rate. Further, when aqueous solvents are used as a disperse media, organic solvents such as N-methylpyrrolidone (NMP) and the like are used.

Binder of the invention is dispersed in a particulate form. Namely, it is preferably water-insoluble. Due to said binder dispersion in a particulate form, an adhesive property between porous membrane of the invention and an electrode active material layer mentioned below or organic separator is good. Here, water-insoluble defines 90 mass% or more of insoluble component when 0.5 g of binder is dissolve in 100 g of water at 25 °C. In case when binder is dispersed in a disperse media in a particulate form, an average particle diameter (a dispersed particle diameter) of binder dispersed in a particulate form is preferably 50 to 100 nm, more preferably 70 to 800nm, and the most preferably 100 to 600 nm. In case when said average particle diameter of binder is within the above range, strength and flexibility of the obtained porous membrane for secondary batteries become superior. The average particle diameter of binder is measurable by Laser Diffraction Scatter Particle Diameter Distribution Measuring Device.

In case when binder is dispersed in a disperse media in a particulate form, a solid content concentration is generally 15 to 70 mass%, preferably 20 to 65 mass%, and the most preferably 30 to 60 mass%. In case when solid content concentration is within the above range, a high performance for manufacturing slurry for secondary batteries can be obtained.

Glass-transition temperature (Tg) of binder according to the present invention is preferably -50 to 25 °C, more preferably -45 to 15 °C and the most preferably -40 to 5 °C. In case when Tg of the binder is within the above range, porous membrane of the invention show superior strength and flexibility; and that power output characteristic of secondary batteries using said porous membrane can be improved. Note that glass-transition temperature of the binder can be suitably adjusted by combining various monomers.

Manufactuirng method of a polymer, binder of the invention, is not particularly limited; and any methods including a solution polymerization method, a suspension polymerization method, a massive polymerization method, an emulsifying polymerization method and the like can be used. As for the polymerization reaction, any reaction including ion polymerization, radical polymerization, living radical polymerization and the like can be used. Polymeric initiator used for the polymerization exemplify organic peroxides, such as lauroyl peroxide, diisopropylperoxy dicarbonate, di-2-ethylhexyl peroxydicarbonate, t-butyl peroxypivalate, 3,3,5-trimethylhexanoyl peroxide, azo compounds such as α, α'-azobisisobutyronitrile, ammonium persulfate or potassium persulfate.

Binder of the invention is preferably obtained after a particle state metal removing step, wherein particle state metals included in the binder disperse liquid are removed during binder manufacturing step. In case when a content of particle state metal component included in binder is 10 ppm or less, metal ion cross-linkage between polymers in a slurry for the secondary batteries with time can be prevented, and thus its viscosity increase can be prevented. Further, there is a less concern for an increase of self-discharge by inner short circuit or by dissolution-deposition when charging in secondary batteries; and that a cycle characteristic or safety of batteries improve.

A method to remove metal components in the particle state from binder disperse liquid during the particle state metal removing step is not particularly limited; and a filtration removing method using a filtration filter, a removing method using a vibrating screen, a removing method by a centrifugal separation, a removing method using magnetic force and the like are exemplified. Among all, the removing method using magnetic force is preferable, since removing objects are metal components. Although the removing method using magnetic force is not particularly limited if metal components can be removed, it is preferably performed by placing a magnetic filter in a manufacturing line of the binder when considering its productivity and removal efficiency.

Dispersant, used in the above-mentioned polymerization method during manufacturing step of a binder used in the invention, can be any used in a general synthesis; and its specific examples are benzene sulfonate such as sodium dodecylbenzene sulfonate, sodium dodecylphenylether sulfonate and the like; alkyl sulfate such as sodium lauryl sulfate, sodium tetradodecyl sulfate and the like; sulfosuccinate such as dioctyl sodium sulfosuccinate, dihexyl sodium sulfosuccinate and the like; fatty acid salt such as sodium laurate; ethoxysulfate salt such as sodium polyoxyethylene laurylether sulfate salt, sodium polyoxyethylene nonylphenylether sulfate salt and the like; alkanesulfonate; sodium alkylether phosphate ester salt; non-ionic emulsifier such as polyoxyethylenenonylphenyl ether, polyoxyethylenesorbitanlaurylester, polyoxyethylene-polyoxypropylene block copolymer and the like; and water-soluble polymer such as gelatin, maleic anhydride-styrene copolymer, polyvinylpyrolidone, sodium polyacrylate, polyvinyl alcohol, having 700 or more of polymerization degree and 75% or more of saponification degree, and the like. These can be used alone or a combination of two or more. Among them, benzene sulfonate such as sodium dodecylbenzene sulfonate, sodium dodecylphenylether sulfonate and the like and alkyl sulfate such as sodium lauryl sulfate, sodium tetradodecyl sulfate and the like are preferable; and benzene sulfonate such as sodium dodecylbenzene sulfonate, sodium dodecylphenylether sulfonate and the like are more preferable due to their superiority in oxidation resistivity Additional amount of the dispersant can arbitrary be set, and it is generally around 0.01 to 10 mass% with respect to 100 mass% total amount of monomer.

"pH" of binder according to the invention when dispersed in a disperse media is preferably 5 to 13, more preferably 5 to 12 and the most preferably 10 to 12. In case when "pH" of binder is within the above range, its preservation stability improves, and its mechanical stability further improves.

Examples of pH adjuster, adjusting pH of binders, are hydroxide including alkali metal hydroxide such as lithium hydroxide, sodium hydroxide, potassium hydroxide and the like, alkali earth metal hydroxide such as calcium hydroxide, magnesium hydroxide, barium hydroxide and the like, and hydroxide of metals which belong to IIIA group of a long periodic table such as aluminum hydroxide; carbonates including alkali metal carbonate such as sodium carbonate, potassium carbonate and the like and alkaline-earth metal carbonate such as magnesium carbonate and the like; and organic amines. Examples of organic amines, alkyl amine such as ethyl amine, diethyl amine and propyl amine and the like; alcohol amine such as monomethanol amine, monoethanol amine, monopropanol amine and the like; ammonia such as aqueous ammonia are exemplified. Among all, alkali metal hydroxide is preferable, and sodium hydroxide, potassium hydroxide and lithium hydroxide are particularly preferable, considering binding priority and operability.

A content ratio of binder with respect to 100 mass% of total solid content of slurry for the secondary batteries is preferably 0.5 to 20 mass%, more preferably 0.5 to 10 mass%, and the most preferably 1 to 5 mass%. When content ratio of binder is within the above range, a removal (powder falls) of the above-mentioned non-conductive particles from a porous membrane of the invention is prevented; and flexibility of a porous membrane and a cycle characteristic of secondary batteries using said porous membrane can be improved.

### Isothiazoline-based compound

Slurry for secondary batteries of the invention may include an isothiazoline-based compound. Inclusion of the isothiazoline-based compound prevents propagation of fungi; thus, generation of unusual odor in slurry for a secondary batteries for forming a porous membrane and thickening of said slurry can be prevented, leading to an excellent long-term storage stability.

### Chelate compound

Slurry for secondary batteries of the invention may include a chelate compound. In case when said chelate compound is added, transition metal ion, eluted to electrolyte solution when charging and discharging the secondary battery using a porous membrane formed by said slurry, can be trapped.

### Pyrithione compound

Slurry for secondary batteries of the invention may include a pyrithione compound. The pyrithione compound is stable even under an alkaline condition. Thus, in case when used with an isothiazoline-based compound, antiseptic property efficiency can be prolonged even under an alkaline condition, and a high antimicrobial effect can be obtained by synergistic effect.

### Dispersant

Dispersant includes anionic compound, cationic compound, non-ionic compound, high-molecular compound and the like. Dispersant is selected depending on the used non-conductive particles. An addition of dispersant leads to a uniform porous membrane in which coating priority of slurry for secondary batteries of the invention is good.

### Leveling agent

Leveling agent includes surfactants such as alkyl containing surfactant, silicone containing surfactant, fluorine containing surfactant, metal containing surfactant and the like. In case when adding the above-mentioned surfactant, a generation of cissing when coating the slurry for secondary batteries of the invention on a predetermined substrate can be prevented; and smoothing property of the porous membrane can be improved.

### Antioxidant

Antioxidizing agents includes phenol compound, hydroquinone compound, organic phosphorous compound, sulfur compound, phenylenediamine compound, polymer type phenol compound and the like. Polymer type phenol compound is a polymer comprising a phenol structure within a molecule; and a polymer type phenol compound having a weight-average molecular weight of 200 to 1,000, preferably 600 to 700 is preferably used. Addition of the antioxidizing agent leads to an excellent cycle life of the batteries.

### Thickener

The thickener includes cellulose containing polymers, such as carboxymethylcellulose, methylcellulose, hydroxypropylcellulose, and their ammonium salt and alkali metal salt; (modified)poly(meth)acrylic acid and their ammonium salt and alkali metal salt; polyvinyl alcohol such as (modified)polyvinyl alcohol, a copolymer of acrylic acid or acrylic acid salt and vinyl alcohol, and a copolymer of maleic anhydride, maleic acid or fumaric acid with vinyl alcohol; polyethyleneglycol, polyethyleneoxide, polyvinyl pyrolidone, modifiedpolyacrylic acid, oxidizedstarch, phosphate starch, casein, various modified starch, and the like. Addition of thickener makes a coating priority of slurry for secondary batteries of the invention, or an adhesion of porous membrane of the invention with the below-mentioned electrode activating layer or organic separator is good. Here, "(modified)poly" defines "unmodifiedpoly" or "modifiedpoly", and "(meth)acrylic" defines "acrylic" or "(meth)acrylic".

### Antifoaming agent

Antifoaming agent includes metallic soaps, polysiloxane, polyether, higher alcohol, perfluoroalkyl and the like. Antifoaming steps of the binder can be shortened by adding the antifoaming agent.

### Electrolyte additive

Electrolyte additive includes such as vinylene carbonate used in below-mentioned slurry for electrode and in electrolyte. A cycle life of batteries becomes superior when said electrolyte additive is added.

### Others

Besides the above, nano fine particles such as fumed silica, fumed alumina and the like can be exemplified. Thixotropy of secondary battery slurry can be controlled by mixing siad nano fine particles; and thus a leveling property of the porous membrane thereof can be improved.

The above arbitrary composition is preferably added to the slurry for secondary batteries within a range in which battery characteristics are not affected. The above arbitrary composition includes an isothiazoline-based compound, a chelate compound, a pyrithione compound, a dispersant, a leveling agent, an antioxidant, a thickener, an antifoaming agent, an electrolyte additive, etc. The above composition may be used by adding to the binder. It is preferable that each of the above compositions are included for 10 mass% or less each, with respect to 100 mass% of a total solid content; and a total content of the above composition is preferably 40 mass% or less and more preferably 20 mass% or less. However, in case when a total amount of the non-conductive particles, the water-soluble polymer and the arbitrary compositions is less than 100 mass%, a content ratio of the binder as an arbitrary composition can be suitably increased.

### (Manufacturing method of a slurry for secondary batteries)

A porous membrane is obtained by coating slurry for secondary batteries on the below-mentioned predetermined substrate and drying thereof. The slurry for secondary batteries includes non-conductive particles, a water-soluble polymer, an arbitrary composition added when required, and suitable disperse media.

Slurry for secondary batteries of the invention is slurry for forming the porous membrane, wherein solid contents of the above non-conductive particles, a water-soluble polymer, and an arbitrary composition, added when required, are uniformly dispersed in a disperse media mentioned hereinafter. The disperse media is not particularly limited if solid contents, including non-conductive particles, a water-soluble polymer, and an arbitrary composition, are uniformly dispersed.

Both water and organic solvent can be used as disperse media used in the slurry for secondary batteries. Organic solvent includes cyclicaliphatic hydrocarbon such as cyclopentane, cyclohexane and the like; aromatic hydrocarbon such as toluene, xylene, ethylbenzene and the like; ketone such as acetone, ethylmethylketone, diisopropyl ketone, cyclohexanone, methylcyclohexane, ethylcyclohexane and the like; chlorine aliphatic hydrocarbon such as methylenechloride, chloroform, carbon tetrachloride and the like; ester such as acetic ether, acetic butyl, γ-butyrolactone, ε-caprolactone and the like; acylnitrile such as acetonitrile, propionitrile and the like; ether such as tetrahydrofuran, ethyleneglycoldiethylether and the like; alcohol such as methanol, ethanol, isopropanol, ethyleneglycol, ethyleneglycol monomethylether, and the like; amide such as N-methylpyrrolidone, N,N-dimethylformamide and the like.

These disperse media can be used alone or a combination of 2 or more can be used as a mixed solvent. Among all, a solvent, superior in dispersibility of non-conductive particles and has a low boiling point and a high volatile, is preferable since it can be removed in a short time at a low temperature. In concrete, acetone, toluene, cyclohexanone, cyclopentane, tetrahydrofuran, cyclohexane, xylene, water, N-methylpyrrolidone, or their mixtures are preferable; and water is the most preferable.

Although solid content concentration of slurry for the secondary batteries is particularly not limited if application and immersion of the slurry are possible and the slurry comprises a viscosity having fluidity; it is generally around 10 to 60 mass%.

Component other than the solid contents is a component which can volatilize with a drying step; and in addition to the above-mentioned dispersant, medium, in which non-conductive particles and a water-soluble polymer are dissolved or dispersed when preparing and adding said non-conductive particles and said water-soluble polymer, is also included.

Slurry for secondary batteries of the invention is used for forming a porous membrane of the invention by drying and removing the included disperse media; therefore, content ratios of non-conductive particles and a water-soluble polymer in the porous membrane is naturally a total solid content of slurry for the secondary batteries of the invention. Namely, a content ratio of non-conductive particles in the porous membrane is preferably 60 to 99 mass% and a content ratio of the water-soluble polymer is preferably 3 to 20 mass%. It is preferable that respective content ratios of the non-conductive particles, the water-soluble polymer and the arbitrary components in the slurry for secondary batteries are within the above preferable ranges; and a total of said ratios is preferably 100 mass%.

A manufacturing method of the slurry for secondary batteries is not particularly limited, and can be obtained by mixing the above non-conductive particles, a water-soluble polymer, a disperse media and an arbitrary composition, if required.

In the invention, with the above-mentioned composition, regardless of a mix method or a mix order, slurry for the secondary batteries wherein non-conductive particles are highly dispersed can be obtained. A mixing device is not particularly limited, if the above compositions can be uniformly mixed; and it can be a ball mill, a sand mill, a pigment disperser, a stone mill, an ultrasonic disperser, a homogenizer, a planetary mixer and the like. Among all, it is particularly preferable to use a highly dispersed device, such as a bead mill, a roll mill, a filmix and the like, which can add a high disperse share.

Viscosity of the slurry for the secondary batteries, in view of uniform coating and slurry stability with time, it is preferably 10 to 10,000 mPa· s, more preferably 20 to 500 mPa· s. Said viscosity was measured using a B-type viscometer at 25 °C with a rotational frequency of 60 rpm.

### [A porous membrane for secondary batteries]

A porous membrane of the invention is manufactured by forming the above-mentioned slurry for secondary batteries to a membrane and drying thereof. A porous membrane is used by laminating on an organic separator, excluding the porous membrane for secondary batteries of the invention hereinafter, or on an electrode, or is used in place of an organic separator. The porous membrane of the invention shows suitable porosities by having voids between compositions such as non-conductive particles, a water-soluble polymer, etc.

Manufacturing methods of a porous membrane of the invention include; (I) a method wherein slurry for secondary batteries, including the above-mentioned non-conductive particles, water-soluble polymer, arbitrary composition and disperse media, is applied on a predetermined substrate (a positive electrode, a negative electrode or an organic separator), and then dried thereof, (II) a method wherein a substrate (positive electrode, negative electrode or organic separator) is immersed in said slurry for secondary batteries, and then dried thereof and (III) a method wherein the slurry for secondary batteries is coated on a release film, and then dried thereof. According to method (III), the obtained porous membrane is transferred to a predetermined substrate (positive electrode, negative electrode or organic separator). Among all, (I) a method wherein slurry for secondary batteries is applied on a substrate (a positive electrode, a negative electrode or an organic separator) and dried thereof is the most preferable, due to their controllability of a film thickness of the porous membrane.

A porous membrane of the invention is manufactured according to the methods (I) to (III), and its manufacturing method will be described below in detail.

According to method (I), slurry of secondary batteries is applied to a predetermined substrate (positive electrode, negative electrode or organic separator), and dried thereof to manufacture porous membrane of the invention.

A method applying the slurry on a substrate is not particularly limited; and such as a doctor blade method, a reverse roll method, a direct roll method, a gravure method, an extrusion method, a brush application method and the like are exemplified. Among all, the gravure method is preferable since uniform porous membrane can be obtained.

Drying methods exemplify a drying method, wherein it is dried by warm air, hot air, low moisture air and the like, a vacuum drying, and a drying method dried by irradiating (far) infrared radiation, electron ray, etc. A drying temperature can be modified according to a kind of the used solvent. In order to completely remove solvent, it is preferable to use a fan type drying device at a high temperature of 120 °C or more, when using a low volatile solvent such as N-methylpyrrolidone. While it can be dried at a low temperature of 100 °C or less, when using a highly volatile solvent. When a porous membrane is formed on the below-mentioned organic separator, it is required to dry without causing shrinkage of the organic separator; and that it is preferable to dry at a low temperature of 100 °C or less.

According to method (II), the substrate (positive electrode, negative electrode or organic separator) is immersed in the slurry for the secondary batteries, and then dried thereof to manufacture porous membrane of the invention. A method immersing the substrate in said slurry is not particularly limited; and may be immersed by dip coating with a dip coater and the like.

The drying method may be the same with the drying method used in the above (I).

According to method (III), the slurry for the secondary batteries is applied to a release film and dried thereof to manufacture a porous membrane on a release film. The obtained porous membrane is transferred onto the substrate (positive electrode, negative electrode or organic separator) to be used.

The application method may be the same with the application method used in the above (I). The transferring method is not particularly limited.

The porous membrane obtained according to the methods (I) to (III), is then may be under a pressure treatment, using a mold press, a roll press and the like when necessary, and an adhesion between substrate (positive electrode, negative electrode or organic separator) and a porous membrane may be improved. However, on this occasion, an excessive pressure treatment may deteriorate voidage of a porous membrane, and that a pressure as well as a pressure time is suitably controlled.

Although a film thickness of the porous membrane is not particularly limited, and suitably set according to the usage and applied area of said porous membrane, an uniform memebrane cannot be formed when it is too thin, while capacity per volume (weight) in a battery decreases when it is too thick; and that it is preferably 0.5 to 50 µm, and more preferably 0.5 to 10 µm.

A porous membrane of the invention is laminated on a surface of substrate (positive electrode, negative electrode or organic separator), and particularly preferable for a part of protection membrane or separator of the below-mentioned electrode activating layer. A porous membrane of the invention may be laminated on any surface of the positive electrode, negative electrode or organic separator; and it can be formed on all the surfaces of positive electrode, negative electrode and organic separator.

### [Secondary battery]

Secondary battery of the invention includes positive electrode, negative electrode, organic separator and electrolyte; and the above porous membrane is laminated on any one of positive electrode, negative electrode and organic separator.

Secondary battery of the invention includes lithium ion secondary battery, nickel-hydrogen secondary battery and the like. Among all, lithium ion secondary battery is preferable; since safety improvement is most required, and it is an object to show the most high introduction effect of porous membrane and to further improve a cycle characteristic. Hereinafter, the use of lithium ion secondary battery will be described.

### (Positive Electrode and Negative Electrode)

Positive electrode and negative electrode are generally formed by adhering an electrode active material layer, having an electrode active material as an essential component, on a current collector.

Positive electrode or negative electrode used for secondary batteries of the invention is preferable to laminate a porous membrane for secondary batteries of the invention on said electrode activating layer. Namely, a positive electrode or a negative electrode used for secondary batteries of the invention is preferably an electrode for secondary batteries of the invention, wherein a current collector, an electrode active material layer and a porous membrane are laminated in this order, and said porous membrane is a porous membrane for secondary batteries of the invention. An electrode active material layer includes an electrode active material and an electrode binder.

### (Electrode active material)

Electrode active material used in an electrode for a lithium ion secondary battery can be any, if it can inject and emission lithium ions reversibly when subjected to an electrical potential in electrolyte; and it may be an inorganic or an organic compound.

Electrode active material (positive electrode active material) for a lithium ion secondary battery positive electrode is classified roughly to a material of inorganic compound and the same of organic compound. Positive electrode active materials of an inorganic compound include a transition metal oxide, a complex oxide of lithium and transition metal, a transition metal sulfide and the like. The above-mentioned transition metal includes Fe, Co, Ni, Mn, and the like. A concrete example of inorganic compound used in the positive electrode active material is a lithium containing combined metal oxide, such as LiCoO₂, LiNiO₂, LiMnO₂, LiMn₂O₄, LiFePO₄, LiFeVO₄ and the like, a transition metal sulfide such as TiS₂, TiS₃, amorphous MoS₂ and the like, and transition metal oxide such as Cu₂V₂O₃, amorphous V₂O-P₂O₅, MoO₃, V₂O₅, V₆O₁₃ and the like. Element substitution may be partly performed in these compounds. Positive electrode active materials of an organic compound may include conducting polymers such as polyacetylene, poly-p-phenylene and the like. Ion based oxide, lack of electrical conductivity, may be used as an electrode active material covered with carbon material, with the presence of carbon source materials during reduction firing. Further, these compounds may be performed with a partial element substitution.

Positive electrode active material of a lithium ion secondary battery may be a mixture of inorganic and organic compounds. Although a particle diameter of positive electrode active material is suitably selected considering an arbitrary formation requirement of battery, in view of improving battery characteristics such as a rate characteristic, a cycle characteristic, and the like, 50% volume cumulative average diameter is generally 0.1 to 50 µm, and preferably 1 to 20 µm. In case when said 50% volume cumulative average diameter is within this range, secondary batteries having a large charge and discharge capacity can be obtained; and thus it is easy to manufacture slurry for electrodes and electrode. The 50% volume cumulative average diameter can be obtained by measuring particle diameter distribution with laser diffraction.

Electrode active material (negative electrode active material) for a lithium ion secondary battery negative electrode includes carbonaceous material such as an amorphous carbon, graphite, natural graphite, meso-carbon microbeads, pitch-based carbon fiber and the like, and a conductive high-molecular compound such as polyacene and the like. Further, negative electrode active materials include metals, such as silicon, tin, zinc, manganese, iron, nickel and the like, alloys thereof, an oxide or sulfate of said metals or alloys thereof, and the like. In addition, lithium alloys, such as metallic lithium, Li-Al, Li-Bi-Cd, Li-Sn-Cd and the like, lithium transition metal nitride, silicone and the like can be used. Negative electrode active materials, wherein a conductive providing material is adhered on a surface by a mechanical reforming method, may also be used. Although particle diameter of negative electrode active material is suitably selected considering the other formation requirement, in view of improving battery characteristics such as an initial efficiency, a rate characteristic, a cycle characteristic and the like, 50% volume cumulative average diameter is generally 1 to 50 µm, preferably 15 to 30 µm.

### (Electrode binder)

In the invention, the electrode activating layer includes binder (Hereinafter, often mentioned as "electrode binder"), in addition to electrode active materials. When electrode binder is included, binding priority of electrode activating layer in electrode improves, a strength with respect to a mechanical force, acted during an electrode winding step and the like, improves, electrode activating layer in electrode becomes less likely to be removed, and thus, a risk of short circuit and the like by detached materials is reduced.

Electrode binder may be various resin components. For instance, polyethylene, polytetrafluoroethylene (PTFE), polyvinylidene fluoride (PVDF), tetrafluoroethylene-hexafluoropropylene copolymer (FEP), polyacrylic acid derivatives and the like may be used. These can be used alone or in a combination of two or more kinds. Further, a binder, used for a porous membrane of the invention when necessary, may be used as the electrode binder.

In addition, the below exemplified softpolymers may also be used as the electrode binder.

An acrylic containing softpolymer which is a single polymer of acrylic acid or methacrylic acid derivatives, such as polybutylacrylate, polybutylmethacrylate, polyhydroxyethylmethacrylate, polyacrylamide, butylacrylate · styrene copolymer, butylacrylate · acrylonitril copolymer, butylacrylate· acrylonitril· glycidyl methacrylate copolymer and the like, and a copolymer of said single polymer and a monomer copolymerizable thereof;
a isobutylene containing softpolymer such as poly isobutylene, isobutylene · isoprene rubber, isobutylene· styrene copolymer and the like;
a diene containing softpolymer such as polybutadiene, polyisoprene, butadiene· styrene random copolymer, isoprene· styrene random copolymer, acrylonitril· butadiene copolymer, acrylonitril· butadiene· styrene copolymer, butadiene · styrene · block copolymer, styrene · butadiene · styrene · block copolymer, isoprene· styrene· block copolymer, styrene· isoprene· styrene· block copolymer and the like;
a silicon containing softpolymer such as dimethylpolysiloxane, diphenylpolysiloxane, dihydroxypolysiloxane, and the like;
an olefin containing softpolymer such as liquid polyethylene, polypropylene, poly-1-butene, ethylene · α-olefin copolymer, propylene · α-olefin copolymer, ethylene· propylene· diene copolymer (EPDM), ethylene· propylene· styrene copolymer and the like;
a vinyl containing softpolymer such as polyvinyl alcohol, polyvinyl acetate, polystearate vinyl, vinyl acetate· styrene copolymer and the like;
an epoxy containing softpolymer such as polyethyleneoxide, polypropyleneoxide, epichlorohydrin rubber;
a fluorine containing softpolymer such as vinylidene fluoride containing rubber, tetrafluoroethylene propylene rubber and the like, and
the other softpolymers such as natural rubber, polypeptide, protein, polyester containing thermoplastic elastomer, vinyl chloride containing thermoplastic elastomer, polyamide containing thermoplastic elastomer and the like. These softpolymers may have a cross-linkage structure, or may be introduced with a functional group by modification.

An amount of electrode binder in an electrode active material layer is, with respect to 100 parts by mass of electrode active material, preferably 0.1 to 5 parts by mass, more preferably 0.2 to 4 parts by mass, and the most preferably 0.5 to 3 parts by mass. In case when the electrode binder in an electrode active material layer is within the above range, removal of active materials can be prevented without inhibiting battery reaction.

Electrode binder is prepared as a solution or a disperse liquid, in order to manufacture an electrode. Its viscosity is generally within a range of 1 to 300,000 mPa· s and preferably 50 to 10,000 mPa· s. Said viscosity is a value measured with B-type viscometer at 25 °C with a rotational frequency of 60 rpm.

### (Arbitrary additive agent)

In the invention, an arbitrary additive agent such as conductive providing material or reinforcing material and the like may be contained, in addition to the above-mentioned electrode active material and electrode binder in an electrode active material layer. As conductive providing material, conductive carbons such as acetylene black, ketjen black, carbon black, graphite, vapor phase grown carbon fiber, carbon nanotube and the like may be used; and carbon powders such as graphite, fiber or foil of various metals may also be used. Reinforcing material includes various inorganic or organic fillers having a spherical shape, a plate shape, a rod shape or a fibrous shape. By using said conductive providing material, electrical contact between electrode active materials can be improved; and a discharge rate characteristic can be improved when used in a lithium ion secondary battery. Used amount of conductive providing material or reinforcing material is generally 0 to 20 parts by mass, and preferably 1 to 10 parts by mass with respect to 100 parts by mass of electrode active materials. Further, isothiazoline based compound or chelate compound may be included in electrode activating layer.

### (Manufacturing method of electrode for secondary batteries)

Electrode for secondary batteries of the invention is manufactured by laminating the porous membrane for secondary batteries of the invention on a surface of electrode activating layer of a current collector, on which said electrode activating layer is adhered in a layered form. Electrode activating layer may be formed by adhering slurry (hereinafter, often mentioned as "slurry for electrodes"), including electrode active material, electrode binder and solvent, to a current collector. Although laminating method of the porous membrane on a surface of electrode activating layer is not particularly limited, methods of (I) to (III), described in the above-mentioned manufacturing method of the porous membrane, may be exemplified.

The solvent can be any, if the electrode binder is dissolved or dispersed to a particulate form.

Solvents used for the slurry for electrodes can be water or organic solvent. The organic solvent includes cyclicaliphatic hydrocarbons such as cyclopentane, cyclohexane and the like; aromatic hydrocarbons such as toluene, xylene and the like; ketones such as ethylmethylketone, cyclohexanone and the like; esters such as acetic ethyl, acetic butyl, γ-butyrolactone, ε-caprolactone and the like; acylnitriles such as acetonitrile, propionitrile and the like; ethers such as tetrahydrofuran, ethyleneglycoldiethylether and the like; alcohols such as methanol, ethanol, isopropanol, ethyleneglycol, ethyleneglycol monomethylether and the like; and amidos such as N-methylpyrrolidone, N,N-dimethylformamide and the like. These solvents may be used alone or a mixture of two kinds or more, which is suitably selected in view of drying rate or environment.

Additive agent expressing various functions, such as thickener, may be further contained in the slurry for electrodes. A polymer, soluble to a solvent used for slurry for electrodes, is used as the thickener. In concrete, a thickener exemplified in the secondary battery slurry of the invention may be used. The used amount of the thickener is preferably 0.5 to 1.5 parts by mass, with respect to 100 parts by mass of electrode active material. In case when used amount of thickener is within the above range, coating property of slurry for electrodes and adhesion with current collector are superior.

The slurry for electrodes further includes, in addition to the above components and in view of improving stability of a battery and lengthening its life-span, trifluoropropylene carbonate, vinylene carbonate, catechol carbonate, 1,6-dioxaspiro[4,4]nonane-2,7-dione, 12-crown-4-ether and the like. In addition, these may be used by being contained in the below-mentioned electrolyte.

An amount of the solvent in the slurry for electrodes is used by adjusting its viscosity suitable for a coating, depending on a kind of electrode active material or binder for electrode. In concrete, a solid content concentration of electrode active material, electrode binder and an arbitrary additive agent such as conductive providing material is adjusted to preferably 30 to 90 mass%, more preferably 40 to 80 mass%.

The slurry for electrodes is obtained by mixing an electrode active material, an electrode binder, an arbitrary additive agent, such as a conductive providing material added when necessary, and a solvent, using a mixing device. The mixture can be performed by supplying all the above components to the mixing device at once. In case when an electrode active material, an electrode binder, a conductive providing material and a thickener are used as composition of the slurry for electrodes, it is preferable to mix conductive providing material and thickener in a solvent, disperse the conductive providing material to a fine particle state, add an electrode binder and an electrode active material, and further mix thereof, in view of improving dispersibility of the slurry. The mixing device include ball mill, sand mill, pigment disperser, stone mill, ultrasonic disperser, homogenizer, planetary mixer, hobart mixer and the like. It is preferable to use ball mill, since aggregation of conductive providing material or electrode active material can be prevented.

An average particle diameter of slurry for electrodes is preferably 35 µm or less, more preferably 25 µm or less. In case when particle diameter of the slurry is within the above range, a high dispersibility of conductive providing material and uniform electrode can be obtained. The average particle diameter is measurable by Laser Diffraction Scatter Particle Diameter Distribution Measuring Device.

Although the current collector is not particularly limited if it is a material having an electrical conductivity and an electrochemical durability, in view of having heat resistance; metal materials such as iron, copper, aluminum, nickel, stainless steel, titanium, tantalum, gold, platinum and the like are preferable. Among all, aluminum is particularly preferable for positive electrode of a lithium ion secondary battery and copper is particularly preferable for negative electrode of a lithium ion secondary battery. Although a shape of the current collector is not particularly limited, a sheet type having a thickness around 0.001 to 0.5 mm is preferable. In order to heighten adhesion strength of electrode activating layer, it is preferable to preliminarily roughen the current collector before use. The roughening methods include a mechanical polishing method, an electropolishing method, a chemical polishing method and the like. In the mechanical polishing method, a coated abrasive to which polishing particles are bonded, a grinding stone, an emery wheel, a wire-brush provided with steel cable and the like are used. Further, in order to heighten adhesion strength or conductivity of an electrode active material layer, an inner layer may be formed on the surface of current collector.

A manufacturing method of an electrode active material layer can be any if an electrode active material layer is bonded at least on one-side, preferably on both sides of the current collector in a layered form. For instance, the slurry for electrodes is applied to the current collector and dried thereof, and then heat treated at 120 °C or more for 1 hour or more to form an electrode active material layer. An application method of slurry for electrodes on the current collector is not particularly limited; for instance, a doctor blade method, a dip method, a reverse roll method, a direct roll method, a gravure method, an extrusion method and a brush application method can be exemplified. Drying methods include a drying by such as warm air, hot air, a low moisture air, a vacuum drying and a drying method by irradiation of such as (far) infrared radiation or electron ray.

Next, it is preferable to lower a voidage of electrode activating layer by pressure treatment using a mold press, a roll press and the like. Range of the voidage is preferably 5 to 15%, and more preferably 7 to 13%. Excessively high voidage deteriorates charging efficiency or discharge efficiency. While excessively low voidage may cause problems: e.g. a high volume capacity is difficult to obtain and an electrode active material layer is easy to be released which apt to generate defects. Further, when a curable polymer is used, it is preferable to be cured.

Thickness of electrode activating layer, for both positive electrode and negative electrode, is generally 5 to 300 µm, preferably 10 to 250 µm.

A porous membrane for secondary batteries of the invention is preferably laminated on an organic separator used for secondary batteries of the invention. Namely, in the secondary battery of the invention, the separator is preferably the separator for secondary batteries of the invention; which is formed by laminating an organic separator and a porous membrane for secondary batteries of the invention, and said porous membrane for secondary batteries of the invention partly constitute the separator together with said organic separator.

### (Organic separator)

As an organic separator for a lithium ion secondary battery, a well-known separator including polyolefin resin, such as polyethylene, polypropylene, or aromatic polyamide resin is used.

As for an organic separator of the invention, a porous membrane without electron conductivity, provided with ion conductivity, and having a high resistivity to organic solvent and fine pore diameter, is used. And this includes, microporous membrane manufactured with a resin, such as polyolefin containing resin (polyethylene, polypropylene, polybutene and polyvinyl chloride), mixture thereof, copolymer thereof and the like, microporous membrane manufactured with a resin such as polyethyleneterephthalate, poly cycloolefin, polyether sulfon, polyamide, polyimide, polyimideamide, polyaramid, polycycloolefin, nylon, polytetrafluoroethylene and the like, materials wove by polyolefin containing fiber or their non-woven fabric and collective of insulating material particles may be exemplified. Among all, microporous membrane of polyolefin containing resin is preferable since the slurry for the secondary batteries of the invention is superior in coating priority, thus, a membrane thickness of the overall separator can be thin, active material ratio in battery can be increased, and capacity per volume can be raised.

Thickness of the organic separator is generally 0.5 to 40 µm, preferably 1 to 30 µm, and more preferably 2 to 20 µm. Within this range, resistance of organic separator in battery becomes small. Further, workability when coating the slurry for the secondary batteries of the invention on organic separator is good.

In the invention, polyolefin containing resin used as an organic separator matrial includes homopolymer, copolymer and mixture thereof of polyethylene, polypropylene and the like. Said polyethylene include, polyethylene of a low density, a medium density and a high density; and in view of pricking strength or mechanical strength, polyethylene of high density is preferable. Further, in view of providing flexibility, 2 kinds or more of the polyethylene may be mixed. Polymerization catalyst used for the polyethylene is also not particularly limited, and Ziegler-Natta catalyst, Phillips catalyst, metallocene catalyst and the like are exemplified. In view of satisfying both mechanical strength and a high permeability, viscosity average molecular weight of polyethylene is a hundred thousand to 12 million, more preferably 2 hundred thousand to 3 million. Polypropylene exemplifies homopolymer, random copolymer and block copolymer; and one kind or a mixture of two or more kinds can be used. Further, polymerization catalyst is not particularly limited; and includes Ziegler-Natta catalyst, metallocene catalyst and the like. Further, although stereoregularity is also not particularly limited and isotactic, syndiotactic, atactic and the like can be used; isotactic polypropylene is preferably used since it is inexpensive. Further, within a range not to interfere effect of the present invention, polyolefin, other than polyethylene or polypropylene, and an additive agent, such as an antioxidizing agent, a nucleating agent and the like, may suitably added.

Organic separator of polyolefin contained may be manufactured in a well-known and a well-used method. For instance, a dry method wherein polypropylene and polyethylene are melt extruded and film-formed to manufacture a membrane, annealed thereof at a low temperature, their crystalline domain was grown, stretched in this state, and then microporous membrane is formed by stretching amorphous domain, a wet method wherein carbon hydride solvent, the other low molecular material, polypropylene and polyethylene are mixed, and then a film-formed, within this film, in which solvent or low molecular material is aggregated to amorphous phase and beginning to form island phase, the solvent and the low molecular material are removed by using the other volatilizable solvent, and then microporous membrane is formed, and the like may be selected. Among all, in view of lowering resistance and obtaining large void, a dry method is preferable.

The organic separator used in the invention may include an arbitrary filler or fiber compound in view of controlling strength, hardness, heat shrinkage rate. Further, when laminating porous membrane of the invention, in object to improve adhesion between organic separator and the porous membrane, and to improve impregnated property of a liquid by lowering surface tension with respect to electrolyte, it may be preliminary coated with a low molecular compound or a high-molecular compound, or may be electromagnetic radiation treated such as by ultraviolet rays or plasma treated such as by corona discharge-plasma gas. In particular, it is preferable to be coated with a high-molecular compound having a polar group, such as carboxylic acid group, hydroxyl group and bisulfonate group, since impregnated property of electrolyte becomes high and adhesion with the porous membrane becomes obtainable.

### (Manufacturing method of separator for secondary batteries)

A separator for secondary batteries of the invention is manufactured by laminating the porous membrane for secondary batteries of the invention on the above-mentioned organic separator. Although the stacking method is not particularly limited, methods of (I) to (III), described in the above-described manufacturing method of a porous membrane, may be exemplified.

### (Electrolyte)

As for an electrolyte, an organic electrolyte, wherein supporting electrolyte is dissolved in an organic solvent, is used. Lithium salt can be used as a supporting electrolyte. Although said lithium salt is not particularly limited, LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, (C₂F₅SO₂)NLi and the like are exemplified. Among all, LiPF₆, LiClO₄ and CF₃SO₃Li are preferable, since they are easily solved in a solvent and exhibit a high degree of dissociation. These may be used in a combination of two kinds or more. Higher dissociation degree of supporting electrolyte leads to a higher conductivity degree of lithium ion; and thus conductivity degree of lithium ion may be adjusted according to a kind of the supporting electrolyte.

Although an organic solvent used in the electrolyte is not particularly limited if it can dissolve supporting electrolyte, carbonates such as dimethyl carbonate (DMC), ethylene carbonate (EC), diethyl carbonate (DEC), propylene carbonate (PC), butylene carbonate (BC), methylethyl carbonate (MEC) and the like, esters such as γ-butyrolactone, methyl formate and the like, ether such as 1, 2-dimethoxyethane, tetrahydrofuran and the like, sulfur-containing compounds such as sulfolane, dimethylsulfoxide and the like, are preferably used. Further, a mixture of the solvents may be used. Among all, carbonate is preferable due to their high dielectric constant and wide electrical potential domain, which is stable. Lower viscosity of a solvent leads to higher conductivity degree of lithium ion; and thus, conductivity degree of lithium ion may be adjusted according to a kind of solvent.

Concentration of supporting electrolyte in electrolytic solution is generally 1 to 30 mass%, preferably 5 to 20 mass%. Further, it is generally used with concentration of 0.5 to 2.5 mol/L, in accordance with a kind of supporting electrolyte. Excessively low or high concentration of supporting electrolyte tends to show low ion conductivity Low concentration of electrolyte leads to a large degree of swelling of binder; and that conductivity degree of lithium ion may be adjusted by a concentration of the electrolyte.

### (Manufacturing method of secondary batteries)

Concrete manufacturing method of a lithium ion secondary battery may be a method wherein a positive electrode and a negative electrode are superimposed via an organic separator, wind or fold thereof in accordance with battery formation, put into a battery container, and an electrolyte is injected in the battery container and sealed. Porous membrane of the invention is laminated on any one of the positive electrode, the negative electrode or the organic separator. A method to laminate a porous membrane of the invention on the positive electrode, the negative electrode or the organic separator is a method described in above (I) or (II). Further, as is described in the above (III), it is possible to laminate the porous membrane independently on the positive electrode, the negative electrode or the organic separator. Expanded metal, fuse, overcurrent protective device such as PTC device or lead plate may be added when required; and increased pressure inside the battery, excessive charge and discharge can be prevented. A shape of a battery can be any, such as coin type, button type, sheet type, cylindrical type, square type, flattened type and the like.

In secondary batteries of the invention, a porous membrane of the invention is preferably laminated on a surface of electrode activating layer of positive or negative electrode. By laminating a porous membrane of the invention on a surface of electrode activating layer, even when organic separator generates shrinkage by heat, a short circuit between positive electrode and negative electrode will not generate and a high stability is maintained. Further, even when a porous membrane of the invention is laminated on an organic separator, voids formed on a surface of the organic separator will not be filled, and that a high cycle characteristic can be realized.

In addition, the porous membrane is able to function as a separator by laminating the porous membrane of the invention on a surface of the electrode activating layer, even if there is no organic separator. Thus, the secondary battery can be manufactured at a low cost.

### EXAMPLES

The present invention will be described by referring to the examples, however the present invention is not limited thereto. Further, the "parts" and "%" in the present examples are based on the mass basis unless otherwise specified. In Examples and Comparative Examples, various physical properties were evaluated as follows.

### < Moisture amount of the porous membrane for secondary batteries >

An electrode for secondary batteries (an electrode with porous membrane) or a separator for secondary batteries (an organic separator with porous membrane) was cut to a width of 10 cm and a length of 10 cm, which was used as a test piece. The test piece was vacuum dried for 1 hour at a temperature of 80°C. Moisture amount of the test piece was then measured by Karl Fischer's method (JIS K-0068; 2001 a moisture vaporizing method, a vaporizing temperature of 150°C) using a coulometric titration method moisture meter; and moisture amount per unit volume of an electrode for secondary batteries or a separator for secondary batteries was calculated. The less moisture amount per unit volume was preferable, since it avoids causing a side reaction in battery due to the moisture, and avoids lowering battery characteristic.

### (Valuation basis)

A: less than 0.3 µg/cm²
B: 0.3 µg/cm² or more and less than 0.5 µg/cm²
C: 0.5 µg/cm² or more and less than 1.0 µg/cm²
D: 1.0 µg/cm² or more

### < Heat shrinkage test of the separator for secondary batteries >

The separator for secondary batteries (an organic separator with porous membrane) was cut to a width of 10 cm and a length of 10 cm, which was used as a test piece. The test piece was left in an oven, conditioned at a temperature of 150 °C for 1 hour. Length of each side was measured and then shrinkage rate of a side having the largest shrinkage rate was valued with the following valuation basis. The smaller the heat shrinkage rate, the superior the stability of the secondary battery was.

### (Valuation basis)

A: less than 3.0%
B: 3.0% or more and less than 5.0%
C: 5.0% or more and less than 10.0%
D: 10.0% or more

### < Reliability test of the separator for secondary batteries >

The separator for secondary batteries (an organic separator with a porous membrane) was punched out into a round shape having a diameter of 19mm, immersed in 3% methanol solution of non-ionic surfactant (Emulgen (registered trademark) 210P by Kao Corp.), and then air-dried. Electrolyte is impregnated to said round shape separator for secondary batteries and said separator was placed between a pair of round shape SUS plate (a diameter of 15.5mm); and a laminated body having a structure of SUS plate / a round shaped separator for secondary batteries / SUS plate was obtained. Here, a solution wherein LiPF₆ was solved in a mixed solvent of ethylene carbonate (EC) and diethylene carbonate (DEC), having a ratio of EC:DEC = 1:2 (volume ratio at 20 °C), in a concentration of 1mole/litter was used as the electrolyte.

The above laminated body was filled in a 2032 type coin cell. A lead wire was lead from said coin cell, and a thermocouple was mounted and put into an oven. Temperature was raised to 200 °C at a rate of 1.6 °C /min. while impressing an alternating current of 10mV amplitude and 1kHz frequency; and generation status of short circuit was confirmed by measuring cell resistance in between. In the present test, in case when resistive value increased to 1,000 Ω/cm² or more by shutdown with the temperature raise, and then rapidly lowered to 10 Ω/cm² or less, the short circuit was determined to be generated. This was tested for 20 times; and evaluated on the basis of the following valuation basis. Less the short circuit generation time, superior the reliability is.

### (Valuation basis)

A: short circuit generation time of 0
B: short circuit generation time of 1
C: short circuit generation time of 2 to 3
D: short circuit generation time of 4 or more

### < Reliability test of the electrode for secondary batteries >

The organic separator (the same with "organic separator" used in Example 1, which is a single layered polypropylene separator having a porosity of 55% and a thickness of 25µm) was punched out into a round shape having a diameter of 19mm, immersed in 3% methanol solution of non-ionic surfactant (Emulgen (registered trademark) 210P by Kao Corp.), and then air-dried. An electrode for secondary batteries (an electrode with porous membrane) in object for measuring was punched out into a round shape having a diameter of 19mm. Electrolyte was impregnated thereof; and they were laminated, placed between a pair of round shaped SUS plate, having a diameter of 15.5 mm, and then obtained a laminated body having a structure of SUS plate / a round shaped organic separator / a round shaped electrode for secondary batteries / SUS plate was obtained. The round shaped electrode for secondary batteries was placed so that its porous membrane surface faces the organic separator side. Here, a solution wherein LiPF₆ was solved in a mixed solvent of ethylene carbonate (EC) and diethylene carbonate (DEC), having a ratio of EC:DEC = 1:2 (volume ratio at 20 °C), in a concentration of 1mole/litter was used as the electrolyte.

The above laminated body was filled in a 2032 type coin cell. A lead wire was lead from said coin cell, and a thermocouple was mounted and put into an oven. Temperature was raised to 200 °C at a rate of 1.6 °C /min. while impressing an alternating current of 10mV amplitude and 1kHz frequency; and generation status of short circuit was confirmed by measuring cell resistance in between. In the present test, in case when resistive value increased to 1,000 Ω/cm² or more by shutdown with the temperature raise, and then rapidly lowered to 10 Ω/cm² or less, the short circuit was determined to be generated. This was tested for 20 times; and evaluated on the basis of the following valuation basis. Less the short circuit generation time, superior the reliability is.

### (Valuation basis)

A: short circuit generation time of 0
B: short circuit generation time of 1
C: short circuit generation time of 2 to 3
D: short circuit generation time of 4 or more

### < Expansion during a high-temperature storage of secondary batteries >

The manufactured laminated lithium ion secondary battery was left for 24 hours, charged and discharged at 4.3V, 0.1C charging and discharging rate; and then an initial thickness T0 of the laminated lithium ion secondary battery was measured. And then charged to 4.3V and stored at 60 °C for 7 days, charged and discharged at 4.3V, 0.1C charging and discharging rate, and a thickness T1 of a laminated lithium ion secondary battery after a high-temperature storage. Expansion during a high-temperature storage of the secondary battery is a thickness change rate shown by ΔT = (T1 / T0 x 100) - 100%; and evaluated on the basis of the following basis. Smaller the value is, less the gas generation is, inhibiting an expansion of secondary batteries.

### (Valuation basis)

A: less than 1%
B: 1% or more and less than 2%
C: 2% or more and less than 3%
D: 3% or more

### < A high-temperature cycle characteristic of secondary batteries >

The manufactured laminated lithium ion secondary battery was left for 24 hours, charged and discharged at 4.2V, 0.1C charging and discharging rate; and then an initial capacity C0 was measured. And then charged to 4.2V and discharged to 3.0V at 60 °C, 0.1C charging and discharging rate repeatedly, and capacity C1 after 100 cycles was measured. The high-temperature cycle characteristic was evaluated on the basis of a capacity retention ratio shown by ΔC = C1 / C0 x 100 (%). Higher the value is, less the reduction of discharging capacity is, which is superior in the cycle characteristic.

### (Valuation basis)

A: 80% or more
B: 75% or more and less than 80%
C: 70% or more and less than 75%
D: less than 70%

### (Example 1)

### <1-1. Manufacturing a water-soluble polymer A>

100 pats of isobutylene-maleic anhydride copolymer (Kurary Co., Ltd, product name: ISOBAN (registered trademark)-04) was put in a reactor vessel with stirrer, ammonia gas was blown, and the reaction was performed till heat generation stopped (approx. 1 hour) while cooling with a water bath. Subsequently, ammonia gas was press fitted while heating with an oil bath, temperature was raised to 200 °C while eliminating generated water, and imidization reaction was performed. After the reaction, the reaction product was taken out and dry-heated, and maleimide-maleic anhydride copolymer A was obtained. Composition of the obtained maleimide-maleic anhydride copolymer A was 50 mol% of isobutylene structural unit, 30 mol% of maleic anhydride structural unit and 20 mol% of maleimide structural unit.

100 parts of the obtained maleimide-maleic anhydride copolymer A, 21.9 parts of sodium hydroxide and 487.7 parts of ion-exchange water were put in a reactor vessel with stirrer, stirred at 90 °C for 5 hours, and a water solution of water-soluble polymer A having a solid content concentration of 20% was obtained. Note, weight-average molecular weight of water-soluble polymer A was 60,000.

### <1-2. Manufacturing binder for the porous membrane>

0.06 parts of sodium dodecyl sulfate, 0.23 parts of ammonium peroxodisulfate and 100 parts of ion-exchange water were added to a reactor vessel with stirrer, and mixed thereof to obtain a mixture A; and then its temperature was raised to 80°C.

On the other hand, 83.8 parts of butyl acrylate, 2.0 parts of methacrylic acid, 12.0 parts of acrylonitrile, 1.0 part of allyl glycidyl ether, 1.2 parts of N-methylolacrylamide, 0.1 parts of sodium dodecyl sulfate and 100 parts of ion-exchange water were mixed and dispersion of monomer mixture 1 was prepared.

Said dispersion of monomer mixture 1 was constantly added to the above mixture A for 4 hours, and polymerized. Temperature of reaction system during constantly adding dispersion of monomer mixture 1 was maintained at 80°C; and the reaction was progressed. After the constant addition, the reaction was continuously progressed for 3 hours at 90°C. Thus, an aqueous dispersion including binder for a porous membrane was obtained.

After cooling the aqueous dispersion including binder for a porous membrane to 25°C, aqueous ammonia was added thereof and its pH was adjusted to 7, then unreacted monomers were removed by introducing steam. Subsequently and promptly, 0.25 parts of EDTA (ethylenediaminetetraacetate) was added as a chelate compound with respect to 100 parts of binder solid content, mixed thereof, and filtrated thereof with a stainless-steel metallic mesh of 200 mesh (aperture size of around 77µm), while further performing solid content density adjustment with ion-exchange water. Then, an aqueous dispersion of binder for a porous membrane (binder aqueous dispersion), having an average particle diameter of 370nm and solid content concentration of 40%, was obtained.

### <1-3. Manufacturing non-conductive particles >

0.06 parts of sodium dodecyl sulfate, 0.23 parts of ammonium peroxodisulfate and 100 parts of ion-exchange water were added to a reactor vessel with stirrer, and mixed thereof to obtain a mixture B; and then its temperature was raised to 80°C.

On the other hand, 93.8 parts of butyl acrylate, 2.0 parts of methacrylic acid, 2.0 parts of acrylonitrile, 1.0 part of allyl glycidyl ether, 1.2 parts of N-methylolacrylamide, 0.1 parts of sodium dodecyl sulfate and 100 parts of ion-exchange water were mixed and dispersion of monomer mixture 2 was prepared.

Said dispersion of monomer mixture 2 was constantly added to the above mixture B for 4 hours, and polymerized. Temperature of reaction system during constantly adding dispersion of monomer mixture 2 was maintained at 80°C; and the reaction was progressed. After the constant addition, the reaction was continuously progressed for 3 hours at 90°C. Thus, an aqueous dispersion of seed polymer particles A, having an average particle diameter of 370nm, was obtained.

20 parts of said aqueous dispersion of seed polymer particles A on the solid content basis (namely, seed polymer particles A on mass basis), 100 parts of ethylene glycol dimethacrylate (Kyoeisha Chemical Co.,Ltd., product name: LIGHT ESTER EG) as a monomer, 1.0 part of sodium dodecylbenzenesulfonate, 4.0 parts of t-butyl peroxy-2-ethylhexanoate (Nichiyu Kogyo Co., product name: PERBUTYL (registered trademark) O), and 200 parts of ion-exchange water were added to a reactor vessel with stirrer, stirred for 12 hours at 35 °C, and the polymer and the polymerization initiator were completely absorbed to seed polymer particles A. Next, polymerized thereof for 5 hours at 90 °C. steam was then introduced removing unreacted monomer and initiator decomposition product. Thus, an aqueous dispersion of non-conductive particles, having an average particle diameter of 670nm, was obtained.

### <1-4. Manufacturing slurry for secondary batteries >

A water solution of water-soluble polymer A obtained in the above process 1-1, a binder for the porous membrane obtained in the above process 1-2, non-conductive particles obtained in the above process 1-3 and a leveling agent (San Nopco Ltd., product name: SN WET 980) were mixed in water making their solid content ratio 7:12:80:1; and slurry for secondary batteries having a solid content concentration of 20% was obtained.

### < 1-5. Manufacturing a separator for secondary batteries (a porous membrane with an organic separator) >

A single layer polyethylene made separator (16µm thick) manufactured with a wet method was prepared as an organic separator. The slurry for secondary batteries obtained in the above process 1-4 was coated on one surface of this organic separator, making a thickness of the coating after drying to be 4µm, and a slurry layer was obtained. The slurry layer was dried for 10 minutes at 50 °C forming a porous membrane. Subsequently, a porous membrane was similarly formed on the other surface of the organic separator; and a porous membrane with an organic separator having a porous membrane on both sides was obtained.

### < 1-6. Manufacturing a positive electrode >

PVDF (polyvinylidene fluoride by Kureha Chemical Industry Co., Ltd., product name: KF-1100) as a binder for positive electrode was added to 95 parts of LiCoO₂ as cathode activator, making its solid content amount to 3 parts. 2 parts of acetylene black and 20 parts of N-methylpyrrolidone were further added, mixed thereof with a planetary mixer, then slurry for positive electrode was obtained. This slurry for positive electrode was coated on one-side of aluminum foil having 18µm thickness, dried for 3 hours at 120°C and roll pressed; and positive electrode having cathode activating layer with 100 µm total thickness was obtained.

### < 1-7. Manufacturing a negative electrode >

98 parts of graphite having a particle diameter of 20 µm and a specific surface area of 4.2m²/g as anode activator and 1 part, when converted to solid content, of SBR (styrene-butadiene rubber, a glass-transition temperature of -10°C) as binder for negative electrode were mixed. 1 part of carboxymethylcellulose was further mixed to the mixture and mixed thereof with a planetary mixer, then slurry for negative electrode was obtained. This slurry for negative electrode was coated on one-side of copper foil having thickness of 18µm, dried for 3 hours at 120 °C, roll pressed, and negative electrode having anode activating layer with 100µm total thickness was obtained.

### < 1-8. Manufacturing a secondary battery >

Positive electrode obtained in the above 1-6 was cut out to a square having width of 40mm x a length of 40mm, and obtained a square positive electrode. Negative electrode obtained in the above 1-7 was cut out to a square having width of 42mm x a length of 42mm, and obtained a square negative electrode. Further, organic separator with porous membrane was cut out to a square having width of 46mm x a length of 46mm, and obtained a square organic separator with porous membrane.

The above square positive electrode was placed making its current collector surface to contact an aluminum package. An organic separator with a square porous membrane was placed on a surface of cathode activating layer of positive electrode. In addition, the above square negative electrode was placed making a surface of the anode activating layer side to oppose to the separator. Electrolyte was injected into this aluminum package without remaining air. Further, an opening of the aluminum package was heat sealed at 150 °C; and manufactured a laminated lithium ion secondary battery. Here, the electrolyte was 2 capacity% of VC (vinylene carbonate) added to 1.0M LiPF₆ (capacity ratio of EC/DEC = 1/2).

### < 1-9. Evaluation >

Moisture amount of porous membrane of the obtained organic separator with porous membrane was evaluated. Heat shrinkage test and reliability test of the organic separator with porous membrane were evaluated. The expansion and the high-temperature cycle characteristic during a high-temperature storage of the secondary battery were evaluated. Results are shown in Table 1.

### (Example 2)

Slurry for secondary batteries was manufactured with the same method as in Example 1, except the below-mentioned water-soluble polymer B instead of water-soluble polymer A obtained in the process 1-1 of Example 1 was used. An organic separator with porous membrane and a secondary battery were obtained, and evaluated thereof. Results are shown in Table 1.

### < Manufacturing water-soluble polymer B >

Maleimide-maleic anhydride copolymer A manufactured in the process 1-1 of Example 1 was used. 100 parts of the maleimide-maleic anhydride copolymer A, 21.9 parts of lithium hydroxide and 487.7 parts of ion-exchange water were put in a reactor vessel with stirrer, stirred at 90 °C for 5 hours, and a water solution of water-soluble polymer B having a solid content concentration of 20% was obtained. Note, weight-average molecular weight of water-soluble polymer B was 60,000.

### (Example 3)

Slurry for secondary batteries was manufactured with the same method as in Example 1, except the below-mentioned water-soluble polymer C instead of water-soluble polymer A obtained in the process 1-1 of Example 1 was used. An organic separator with porous membrane and a secondary battery were obtained, and evaluated thereof. Results are shown in Table 1.

### < Manufacturing water-soluble polymer C >

Maleimide-maleic anhydride copolymer A manufactured in the process 1-1 of Example 1 was used. 100 parts of the maleimide-maleic anhydride copolymer A, 21.9 parts of ammonia and 487.7 parts of ion-exchange water were put in a reactor vessel with stirrer, stirred at 90 °C for 5 hours, and a water solution of water-soluble polymer C having a solid content concentration of 20% was obtained. Note, weight-average molecular weight of water-soluble polymer C was 60,000.

### (Example 4)

Slurry for secondary batteries was manufactured with the same method as in Example 1, except the below-mentioned water-soluble polymer D instead of water-soluble polymer A obtained in the process 1-1 of Example 1 was used. An organic separator with porous membrane and a secondary battery were obtained, and evaluated thereof. Results are shown in Table 1.

### < Manufacturing water-soluble polymer D >

100 pats of styrene-maleic anhydride copolymer (Hercules Inc., product name: Scripset 520) was put in a reactor vessel with stirrer, ammonia gas was blown, and the reaction was performed till heat generation stopped (approx. 1 hour) while cooling with a water bath. Subsequently, ammonia gas was press fitted while heating with an oil bath, temperature was raised to 200 °C while eliminating generated water, and imidization reaction was performed. After the reaction, the reaction product was taken out and dry-heated, and maleimide-maleic anhydride copolymer B was obtained. Composition of the obtained maleimide-maleic anhydride copolymer B was 50 mol% of styrene, 30 mol% of maleic anhydride and 20 mol% of maleimide.

100 parts of the obtained maleimide-maleic anhydride copolymer B, 21.9 parts of sodium hydroxide and 487.7 parts of ion-exchange water were put in a reactor vessel with stirrer, stirred at 90 °C for 5 hours, and a water solution of water-soluble polymer D having a solid content concentration of 20% was obtained. Note, weight-average molecular weight of water-soluble polymer D was 350,000.

### (Example 5)

Slurry for secondary batteries was manufactured with the same method as in Example 1, except the below-mentioned water-soluble polymer E instead of water-soluble polymer A obtained in the process 1-1 of Example 1 was used. An organic separator with porous membrane and a secondary battery were obtained, and evaluated thereof. Results are shown in Table 1.

### < Manufacturing water-soluble polymer E >

100 pats of isobutylene-maleic anhydride copolymer (Kurary Co., Ltd., product name: ISOBAN (registered trademark)-04), 28.3 pats of p-aminophenol and 200 parts of N-methyl-2-pyrrolidone (NMP) were put in a reactor vessel with stirrer; reacted thereof at 80 °C for 2 hours as a first step reaction and N-(p-hydroxyphenyl)maleamic acid copolymer was generated. And then, a cyclodehydration reaction was performed at 200 °C for 2 hours as a second step reaction. After the reaction, temperature of the solution was set to 40 °C or less, added to water of 2,000 parts and deposited, the reaction product was put out, and heat-dried thereof to obtain maleimide-maleic anhydride copolymer C. A composition of the obtained maleimide-maleic anhydride copolymer C was 50 mol% of isobutylene structural unit, 30 mol% of maleic anhydride structural unit and 20 mol% of maleimide(N-(4-hydroxyphenyl)maleimide) structural unit.

100 parts of the obtained maleimide-maleic anhydride copolymer C, 21.9 parts of sodium hydroxide and 487.7 parts of ion-exchange water were put in a reactor vessel with stirrer, stirred at 90 °C for 5 hours, and a water solution of water-soluble polymer E having a solid content concentration of 20% was obtained. Note, weight-average molecular weight of water-soluble polymer E was 60,000.

### (Example 6)

Slurry for secondary batteries was manufactured with the same method as in Example 1, except the below-mentioned water-soluble polymer F instead of water-soluble polymer A obtained in the process 1-1 of Example 1 was used. An organic separator with porous membrane and secondary batteries were obtained, and evaluated thereof. Results are shown in Table 1.

### < Manufacturing water-soluble polymer F >

100 pats of isobutylene-maleic anhydride copolymer (Kurary Co., Ltd, product name: ISOBAN (registered trademark)-04), 19 pats of normal-butyl amine and 200 parts of N-methyl-2-pyrrolidone (NMP) were put in a reactor vessel with stirrer; reacted thereof at 80 °C for 2 hours as a first step reaction and N-normal-butyl maleamic acid copolymer was generated. And then, a cyclodehydration reaction was performed at 200 °C for 2 hours as a second step reaction. After the reaction, temperature of the solution was set to 40 °C or less, added to water of 2,000 parts and deposited, the reaction product was put out, and heat-dried thereof to obtain maleimide-maleic anhydride copolymer D. A composition of the obtained maleimide-maleic anhydride copolymer D was 50 mol% of isobutylene structural unit, 30 mol% of maleic anhydride structural unit and 20 mol% of maleimide(N-normal-butyl maleimide) structural unit.

100 parts of the obtained maleimide-maleic anhydride copolymer D, 21.9 parts of sodium hydroxide and 487.7 parts of ion-exchange water were put in a reactor vessel with stirrer, stirred at 90 °C for 5 hours, and a water solution of water-soluble polymer F having a solid content concentration of 20% was obtained. Note, weight-average molecular weight of water-soluble polymer F was 60,000.

### (Example 7)

Slurry for secondary batteries was manufactured with the same method as in Example 1, except the below-mentioned water-soluble polymer G instead of water-soluble polymer A obtained in the process 1-1 of Example 1 was used. An organic separator with porous membrane and secondary batteries were obtained, and evaluated thereof. Results are shown in Table 1.

### < Manufacturing water-soluble polymer G >

400 pats of toluene, 28.3 pats of maleimide, 14.3 parts of maleic anhydride, 57.3 parts of isobutylene and 1.0 part of azobisisobutyronitrile were put in an autoclave with stirrer; reacted thereof at 80 °C for 5 hours. After the reaction, a deposition thereof was heated and dried to obtain maleimide-maleic anhydride copolymer E. A composition of the obtained maleimide-maleic anhydride copolymer E was 70 mol% of isobutylene structural unit, 10 mol% of maleic anhydride structural unit and 20 mol% of maleimide structural unit.

100 parts of the obtained maleimide-maleic anhydride copolymer E, 21.9 parts of sodium hydroxide and 487.7 parts of ion-exchange water were put in a reactor vessel with stirrer, stirred at 90 °C for 5 hours, and a water solution of water-soluble polymer G having a solid content concentration of 20% was obtained. Note, weight-average molecular weight of water-soluble polymer G was 60,000.

### Example 8 (Reference Example)

According to the process 1-4 of Example 1, a water solution of water-soluble polymer A obtained in the above process 1-1, a binder for the porous membrane obtained in the above process 1-2, non-conductive particles obtained in the above process 1-3 and a leveling agent (San Nopco Ltd., product name: SN WET 980) were mixed in water making their solid content ratio 18:10:71:1; and slurry for secondary batteries having a solid content concentration of 20% was obtained. An organic separator with porous membrane and secondary batteries were manufactured with the same method as in Example 1, except the above-mentioned slurry for secondary batteries was used; and evaluated thereof. Results are shown in Table 1.

### Example 9 (Reference Example)

An alumina having an average particle diameter of 600nm was used instead of the non-conductive particles obtained in the above process 1-3 of Example 1.

According to the process 1-4 of Example 1, a water solution of water-soluble polymer A obtained in the above process 1-1, a binder for the porous membrane obtained in the above process 1-2, alumina having an average particle diameter of 600nm and a leveling agent (San Nopco Ltd., product name: SN WET 980) were mixed in water making their solid content ratio 2.3:3.7:93.6:0.4; and slurry for secondary batteries having a solid content concentration of 20% was obtained. An organic separator with porous membrane and secondary batteries were manufactured with the same method as in Example 1, except the above-mentioned slurry for secondary batteries was used; and evaluated thereof. Results are shown in Table 1.

### (Example 10)

The slurry for secondary batteries obtained in the process 1-4 of Example 1 was coated on a surface of cathode activating layer of the positive electrode obtained in the process 1-6 of Example 1, completely covering cathode activating layer and making its thickness after drying to be 4 µm; and a slurry layer was obtained. The slurry layer was dried at 50 °C for 10 minutes, forming a porous membrane; and a positive electrode with porous membrane was obtained. The obtained positive electrode with porous membrane had a layer structure of a porous membrane / a cathode activating layer / an aluminum foil. Results of each evaluation are shown in Table 1.

An organic separator of a single layered polypropylene made separator having a porosity of 55% and a thickness of 25 µm, which is the same with the organic separator used in the process 1-5 of Example 1, was used instead of the separator for secondary batteries obtained in the process 1-5 of Example 1.

Secondary batteries was manufactured with the same method as in Example 1, except said positive electrode with porous membrane instead of the positive electrode obtained in the process 1-6 of Example 1 was used. Results are shown in Table 1. Here, in case when a positive electrode with porous membrane is placed in an aluminum package, a surface of the porous membrane side faces the organic separator side, while a surface of the aluminum foil side faces the bottom surface side.

### (Example 11)

Secondary batteries was manufactured with the same method as in Example 1, except the below-mentioned negative electrode with porous membrane was used instead of the negative electrode obtained in the process 1-7 of Example 1; and an organic separator of a single layered polypropylene made separator having a porosity of 55% and a thickness of 25 µm, which is the same with the organic separator used in the process 1-5 of Example 1, was used instead of the separator for secondary batteries obtained in the process 1-5 of Example 1. Results are shown in Table 1. Here, in case when a negative electrode with porous membrane is placed in an aluminum package, a surface of porous membrane side faces an organic separator side, while a surface of the porous copper foil side faces the upper surface side.

### < Manufacturing a negative electrode with a porous membrane >

98 parts of graphite having a particle diameter of 20 µm and a specific surface area of 4.2 m²/g as anode activator and 2 parts, when converted to solid content, of PVDF (polyvinylidene fluoride by Kureha Chemical Industry Co., Ltd., product name: KF-1100) as binder for negative electrode were mixed. 100 parts of N-methyl-2-pyrrolidone was further mixed to the mixture and mixed thereof with a planetary mixer, then slurry for negative electrode was obtained. This slurry for negative electrode was coated on one-side of copper foil having a thickness of 18µm, dried for 3 hours at 120 °C, roll pressed, and negative electrode having anode activating layer with 100µm total thickness was obtained.

The slurry for secondary batteries obtained in the process 1-4 of Example 1 was coated on a surface of anode activating layer of the negative electrode obtained in the process 1-4 of Example 1, completely covering anode activating layer and making its thickness after drying to be 4 µm; and a slurry layer was obtained. The slurry layer was dried at 50 °C for 10 minutes, forming a porous membrane; and a negative electrode with porous membrane was obtained. The obtained negative electrode with porous membrane had a layer structure of a porous membrane / an anode activating layer / a copper foil. Results of each evaluation are shown in Table 1.

### (Comparative Example 1)

Slurry for secondary batteries was manufactured with the same method as in Example 1, except the below-mentioned water-soluble polymer H instead of water-soluble polymer A obtained in the process 1-1 of Example 1 was used; an organic separator with porous membrane and the secondary battery were manufactured and evaluated thereof. Results are shown in Table 1.

### < Manufacturing water-soluble polymer H >

100 pats of isobutylene-maleic anhydride copolymer (Kurary Co., Ltd., product name: ISOBAN (registered trademark)-04), 41.5 pats of sodium hydroxide and 566 parts of ion-exchange water were put in a reactor vessel with stirrer; reacted thereof for 5 hours. Thus, a water solution of water-soluble polymer H having a solid concentration of 20% was obtained. Note, weight-average molecular weight of the water-soluble polymer H was 60,000.

### (Comparative Example 2)

Slurry for secondary batteries was manufactured with the same method as in Example 1, except the below-mentioned water-soluble polymer I instead of water-soluble polymer A obtained in the process 1-1 of Example 1 was used; an organic separator with porous membrane and the secondary battery were manufactured and evaluated thereof. Results are shown in Table 1.

### < Manufacturing water-soluble polymer I >

400 g of toluene, 63.4 g of maleimide, 36.6 g of isobutylene and 1.0 part of azobisisobutyronitrile were put in an autoclave with stirrer; reacted thereof at 80 °C for 5 hours. After the reaction, a deposition thereof was heated and dried to obtain maleimide-isobutylene copolymer. A composition of the obtained maleimide-isobutylene copolymer was 50 mol% of maleimide and 50 mol% of isobutylene.

100 parts of the obtained maleimide-isobutylene copolymer, 21.9 parts of sodium hydroxide and 487.7 parts of ion-exchange water were put in a reactor vessel with stirrer, stirred for 5 hours at 90 °C, and a water solution of water-soluble polymer I having a solid content concentration of 20% was obtained. Note, weight-average molecular weight of water-soluble polymer I was 60,000.

### (Comparative Example 3)

Slurry for secondary batteries was manufactured with the same method as in Example 1, except carboxy methyl cellulose (Daicel Corp., product name: DAICEL 1220) instead of water-soluble polymer A obtained in the process 1-1 of Example 1 was used; an organic separator with porous membrane and the secondary battery were manufactured and evaluated thereof. Results are shown in Table 1.

### (Comparative Example 4)

Water-soluble polymer A obtained in the process 1-1 of Example 1 was not used.

According to the process 1-4 of Example 1, the binder for porous membrane obtained in the process 1-2, the non-conductive particles obtained in the process 1-3 and the leveling agent (San Nopco Ltd., product name: SN WET 980) were mixed in water, making their solid content ratio 13:86:1; and slurry for secondary batteries having a solid content concentration of 20% was obtained. An organic separator with porous membrane and secondary batteries were manufactured with the same method as in Example 1, except the above-mentioned slurry for secondary batteries was used; and evaluated thereof. Results are shown in Table 1.

[Table 1]

**Table 1**

| | | Ex.1 | Ex. 2 | Ex. 3 | Ex. 4 | Ex. 5 | Ex. 6 | Ex. 7 | Ex. 8 | Ex. 9 | Ex. 10 | Ex. 11 | Comp. Ex. 1 | Comp. Ex. 2 | Comp. Ex. 3 | Comp. Ex. 4 |
|---|---|---|---|---|---|---|---|---|---|---|---|---|---|---|---|---|
| | Structural unit (a) | Maleimide | Meleimide | Maleimide | Maleimide | N-(4-hydroxyphenyl) maleimide | N-normal-butyl maleimide | Maleimide | Maleimide | Maleimide | Maleimide | Maleimide | - | Maleimide | - | - |
| | Content ratio (mol%) | 20 | 20 | 20 | 20 | 20 | 20 | 20 | 20 | 20 | 20 | 20 | - | 50 | - | - |
| | Structural unit (b) | Maleic acid | Maleic acid | Maleic acid | Maleic acid | Maleic acid | Maleic acid | Maleic acid | Maleic acid | Maleic acid | Maleic acid | Maleic acid | Maleic acid | - | - | - |
| water-voluble polymer | Content ratio (mol%) | 30 | 30 | 30 | 30 | 30 | 30 | 10 | 30 | 30 | 30 | 30 | 50 | - | - | - |
| | Structural unit (c) | Isobutylene | Isobutylene | Isobutylene | Styrene | Isobutylene | Isobutylene | Isobutylene | Isobutylene | Isobutylene | Isobutylene | Isobutylene | Isobutylene | Isobutylene | - | - |
| | Content ratio (mol%) | 50 | 50 | 50 | 50 | 50 | 50 | 70 | 50 | 50 | 50 | 50 | 50 | 50 | - | - |
| | Weight-average molecular weight | 60000 | 60000 | 60000 | 350000 | 60000 | 60000 | 60000 | 60000 | 60000 | 60000 | 60000 | 60000 | 60000 | - | - |
| Content of the water-soluble polymer (mass%) with respect to 100 mass% of a total solid content of slurry | | 7 | 7 | 7 | 7 | 7 | 7 | 7 | 18 | 2.3 | 7 | 7 | 7 | 7 | - | - |
| non-conductive particles | | Organic Particles | Organic Particle | Organic Particles | Organic Particles | Organic Particles | Organic Particles | Organic Particles | Organic Particles | Alumina | Organic Particles | Organic Particles | Organic Particles | Organic Particles | Organic Particles | Organic Particles |
| | Moisture amount of the porous membrane for secondary batteries | A | A | A | A | A | A | A | A | C | A | A | D | A | D | A |
| | Heat shrinkage test of the separator for secondary batteries | A | A | B | A | A | B | B | A | A | - | - | B | D | A | D |
| | Expansion during a high-tenperature of secondary batteries | A | A | A | A | A | A | A | A | B | A | A | D | A | D | A |
| Evaluation | Reliability test of the separator for secondary batteries | A | A | A | A | A | A | B | A | A | - | - | B | D | A | D |
| | Reliability test of the electrode for secondary batteries | - | - | - | - | - | - | - | - | - | A | A | - | - | - | - |
| | A high-tenperature cycle characteristic of secondary batteries | A | A | A | B | A | A | A | C | C | A | A | B | A | D | A |

| | | | | | | | | | | | | | | | | |
|---|---|---|---|---|---|---|---|---|---|---|---|---|---|---|---|---|
| Ex.8 and Ex.9 are Reference Examples | | | | | | | | | | | | | | | | |

Table 1 shows that porous membranes formed by using slurry for secondary batteries, including non-conductive particles and a specific water-soluble polymer, has a small moisture content as well as a small heat shrinkage rate. In addition, an expansion of secondary batteries due to a gas generation can be prevented; thus, secondary batteries superior in safety and a cycle characteristic can be obtained.

On the other hand, slurry for secondary batteries using the water-soluble polymer with no structural unit (a) (Comp. Ex. 1), slurry for secondary batteries using the water-soluble polymer with no structural unit (b) (Comp. Ex. 2), slurry for secondary batteries using carboxy methyl cellulose as a water-soluble polymer (Comp. Ex. 3), and slurry for secondary batteries without a water-soluble polymer (Comp. Ex. 4) are badly-balanced in evaluation items of the invention.

## Claims

1. Slurry for secondary batteries comprising non-conductive particles and
a water-soluble polymer, wherein
the water-soluble polymer is a maleimide-maleic acid copolymer including a structural unit (a) shown by the below general formula (I) and a structural unit (b) shown by the below general formula (II),
the maleimide-maleic acid copolymer includes 5 to 75 mol% of the structural unit (a) and 5 to 75 mol% of the structural unit (b),
a content of the water-soluble polymer is 5 to 15 mass% with respect to 100 mass% of a total solid content of the slurry for secondary batteries; 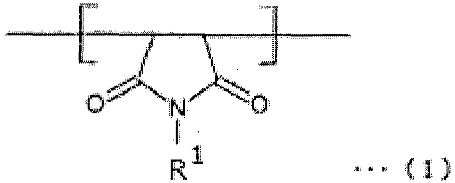 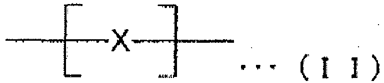
in which "R¹" is hydrogen or a substitution group selected from the group consisting of an alkyl group having a carbon number of 1 to 6, a cycloalkyl group having a carbon number of 3 to 12, a phenyl group and a hydroxyphenyl group, and
"X" is a residual group of maleic acid which may be neutralized with an ion other than hydrogen ion, dehydrated or esterified.

2. The slurry for the secondary batteries as set forth in claim 1, wherein the maleimide-maleic acid copolymer further includes a structural unit (c) shown by the below general formula (III); 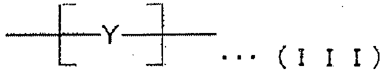 in which "Y" is a hydrocarbon skeleton having a carbon number of 2 to 12.

3. The slurry for the secondary batteries as set forth in claim 1 or 2, wherein the non-conductive particles are organic particles.

4. A porous membrane for the secondary batteries obtainable by forming the slurry for the secondary batteries as set forth in any one of claims 1 to 3, to a membrane and drying thereof.

5. An electrode for the secondary batteries, in which a current collector, an electrode active material layer and a porous membrane are laminated in this order, wherein
the porous membrane is the porous membrane for the secondary batteries as set forth in claim 4.

6. A separator for the secondary batteries, in which an organic separator and a porous membrane are laminated, wherein
the porous membrane is the porous membrane for the secondary batteries as set forth in claim 4.

7. Secondary batteries comprising a positive electrode, a negative electrode, an organic separator, and an electrolyte, wherein
the porous membrane for the secondary batteries as set forth in claim 4 is laminated on any one of the positive electrode, the negative electrode, and the organic separator.

## Patentansprüche

1. Aufschlämmung für Sekundärbatterien, umfassend nicht-leitende Teilchen und
ein wasserlösliches Polymer, wobei
das wasserlösliche Polymer ein Maleimid-Maleinsäure-Copolymer ist, welches eine Struktureinheit (a), dargestellt durch die nachstehende allgemeine Formel (I), und eine Struktureinheit (b), dargestellt durch die nachfolgende allgemeine Formel (II), einschließt, das Maleimid-Maleinsäure-Copolymer 5 bis 75 Mol-% der Struktureinheit (a) und 5 bis 75 Mol-% der Struktureinheit (b) einschließt,
ein Gehalt des wasserlöslichen Polymers 5 bis 15 Gew.-%, bezogen auf 100 Gew.-% des gesamten Feststoffgehalts der Suspension für Sekundärbatterien, beträgt; 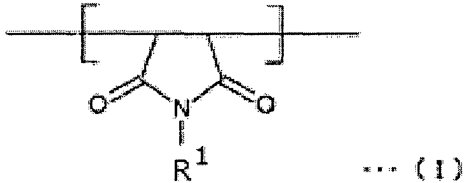 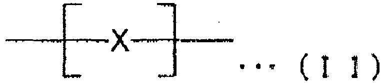
in welcher "R¹" gleich Wasserstoff oder eine Substitutionsgruppe, ausgewählt aus der Gruppe bestehend aus einer Alkylgruppe mit einer Kohlenstoffzahl von 1 bis 6, einer Cycloalkylgruppe mit einer Kohlenstoffzahl von 3 bis 12, einer Phenylgruppe und einer Hydroxyphenylgruppe, ist, und
"X" eine Restgruppe von Maleinsäure ist, welche mit einem von einem Wasserstoffion verschiedenen Ion neutralisiert, dehydriert oder verestert sein kann.

2. Die Aufschlämmung für Sekundärbatterien gemäß Anspruch 1, wobei das Maleimid-Maleinsäure-Copolymer ferner eine Struktureinheit (c), dargestellt durch die nachstehende allgemeine Formel (III), einschließt: 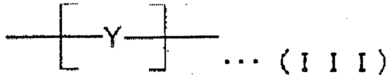 in welcher "Y" ein Kohlenwasserstoffskelett mit einer Kohlenstoffzahl von 2 bis 12 ist.

3. Die Aufschlämmung für Sekundärbatterien gemäß Anspruch 1 oder 2, wobei die nicht-leitenden Teilchen organische Teilchen sind.

4. Eine poröse Membran für Sekundärbatterien, erhältlich durch Formen der Aufschlämmung für Sekundärbatterien gemäß einem der Ansprüche 1 bis 3 zu einer Membran, und Trocknen davon.

5. Eine Elektrode für Sekundärbatterien, in welcher ein Stromabnehmer, eine aktive Elektrodenmaterialschicht und eine poröse Membran in dieser Reihenfolge laminiert sind, wobei
die poröse Membran die poröse Membran für Sekundärbatterien gemäß Anspruch 4 ist.

6. Ein Separator für Sekundärbatterien, in welchem ein organischer Separator und eine poröse Membran laminiert sind, wobei
die poröse Membran die poröse Membran für Sekundärbatterien gemäß Anspruch 4 ist.

7. Sekundärbatterien, umfassend eine positive Elektrode, eine negative Elektrode, einen organischen Separator und einen Elektrolyten, wobei
die poröse Membran für Sekundärbatterien gemäß Anspruch 4 beliebig auf die positive Elektrode, die negative Elektrode und den organischen Separator laminiert ist.

## Revendications

1. Suspension épaisse pour batteries secondaires comprenant des particules non conductrices et un polymère hydrosoluble, dans laquelle
le polymère hydrosoluble est un copolymère de maléimide-acide maléique contenant un motif structural (a) représenté par la formule générale (I) ci-dessous et un motif structural (b) représenté par la formule générale (II) ci-dessous,
le copolymère de maléimide-acide maléique contient de 5 à 75 % en mol de motif structural (a) et de 5 à 75 % en mol de motif structural (b),
une teneur en polymère hydrosoluble est de 5 à 15 % en poids pour 100 % en poids d'une teneur totale en solides de la suspension épaisse pour batteries secondaires ; 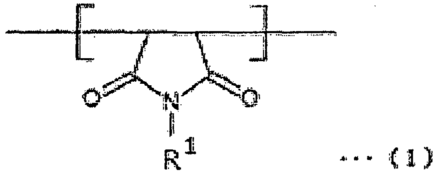 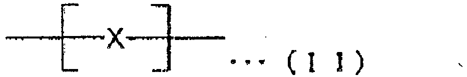
dans laquelle « R¹ » est un atome d'hydrogène ou un groupe de substitution choisi dans le groupe constitué par un groupe alkyle ayant un nombre de carbones de 1 à 6, un groupe cycloalkyle ayant un nombre de carbones de 3 à 12, un groupe phényle et un groupe hydroxyphényle, et
« X » est un groupe résiduel d'acide maléique qui peut être neutralisé à l'aide d'un ion autre qu'un ion hydrogène, déshydraté ou estérifié.

2. Suspension épaisse pour batteries secondaires selon la revendication 1, dans laquelle le copolymère de maléimide-acide maléique contient en outre un motif structural (c) représenté par la formule générale (III) ci-dessous ; 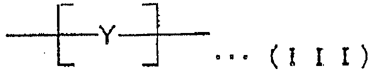 dans laquelle « Y » est un squelette hydrocarboné ayant un nombre de carbones de 2 à 12.

3. Suspension épaisse pour batteries secondaires selon la revendication 1 ou 2, dans laquelle les particules non conductrices sont des particules organiques.

4. Membrane poreuse pour batteries secondaires pouvant être obtenue par mise en forme de la suspension épaisse pour batteries secondaires selon l'une quelconque des revendications 1 à 3, pour obtenir une membrane et séchage de celle-ci.

5. Electrode pour batteries secondaires, dans laquelle un collecteur de courant, une couche de matériau actif d'électrode et une membrane poreuse sont stratifiés dans cet ordre, dans laquelle
la membrane poreuse est la membrane poreuse pour batteries secondaires selon la revendication 4.

6. Séparateur pour batteries secondaires, dans lequel un séparateur organique et une membrane poreuse sont stratifiés, dans lequel
la membrane poreuse est la membrane poreuse pour batteries secondaires selon la revendication 4.

7. Batteries secondaires comprenant une électrode positive, une électrode négative, un séparateur organique, et un électrolyte, dans lesquelles
la membrane poreuse pour batteries secondaires selon la revendication 4 est stratifiée sur l'un(e) quelconque de l'électrode positive, l'électrode négative, et le séparateur organique.
